# EUROPÄISCHE PATENTSCHRIFT

(11) **EP 4 105 712 B1**
(45) Veröffentlichungstag und Bekanntmachung des Hinweises auf die Patenterteilung: **31.01.2024**
(21) Anmeldenummer: 22179254.2
(22) Anmeldetag: 15.06.2022
(51) Int. Cl.: G02B 27/01, G02B 26/08, G02B 26/10, G02C 7/08, G02B 27/00

(54) **BRILLEN-ANZEIGEVORRICHTUNG ZUM ANZEIGEN EINES VIRTUELLEN BILDES IN EINEM SICHTFELD EINES NUTZERS, AUGMENTED-REALITY-BRILLEN-ANZEIGEVORRICHTUNG**
EYEWEAR DISPLAY DEVICE FOR DISPLAYING A VIRTUAL IMAGE IN A FIELD OF VIEW OF A USER, AUGMENTED REALITY EYEWEAR DISPLAY DEVICE
DISPOSITIF D'AFFICHAGE DE LUNETTES PERMETTANT D'AFFICHER UNE IMAGE VIRTUELLE DANS UN CHAMP DE VISION D'UN UTILISATEUR, DISPOSITIF D'AFFICHAGE DE LUNETTES DE RÉALITÉ AUGMENTÉE

(30) Priorität: 17.06.2021 DE 102021206209
(43) Veröffentlichungstag der Anmeldung: 21.12.2022
(73) Patentinhaber: Gixel GmbH, 76228 Kalrsruhe (DE)
(72) Erfinder: TAPHANEL, Miro, 76228 Karlsruhe (DE); LUO, Ding, 76228 Karlsruhe (DE)
(74) Vertreter: Hernandez, Yorck

(56) Entgegenhaltungen:
- JP-A- H06 313 858
- JP-A- 2000 111 827
- US-A1- 2019 353 894
- US-B2- 10 409 065

## Beschreibung

Die Erfindung betrifft eine Brillen-Anzeigevorrichtung zum Anzeigen eines virtuellen Bildes in einem Sichtfeld eines Nutzers, eine Augmented-Reality-Brillen-Anzeigevorrichtung oder kurz Augmented-Reality-(AR-)Brille. Diese weist eine Gestelleinheit, eine an der Gestelleinheit angebrachte Bildschirmeinheit zum Abstrahlen eines Lichtes als computergenerierte Bildinformation in eine erste Richtung auf, sowie an der Gestelleinheit angebrachte teiltransparente Strahlteilereinheiten zum Umlenken des in die erste Richtung abgestrahlten Lichtes der Bildschirmeinheit in eine zweite Richtung, entsprechend einem Sichtfeld des Nutzers.

Mittels Augmented-Reality-(AR)-Brillen kann dem Licht der natürlichen Umgebung, d. h. dem Licht aus einem Sichtfeld eines Nutzers der AR-Brille, ein virtuelles Bild überlagert werden. Es besteht entsprechend die Möglichkeit, die menschliche Wahrnehmung zu täuschen, indem sich virtuelle Objekte in die reale Welt einbetten, "einspiegeln", lassen. Technisch wird dabei Licht eines Displays als virtuelles Bild pro Auge mittels durchlässiger Strahlteiler-Technologie eingespiegelt. Wünschenswert wäre es hier, im gesamten natürlichen menschlichen Sichtfeld des Nutzers virtuelle Objekte einspiegeln zu können. Nach aktuellem Entwicklungsstand ist es jedoch bisher nicht gelungen, einen halbdurchlässigen Strahlteiler zu entwerfen, der diesen Anforderungen gerecht werden kann. Dies gilt insbesondere für AR-Brillen, welche einen einer gewöhnlichen alltagstauglichen Brille entsprechenden Formfaktor aufweisen sollen.

Eine umfassende Zusammenfassung bezüglich AR-Brillen und gerade Strahlteiler-Technologien ist in dem Buch "Optical Architectures for AR, VR, and Mixed Reality Headsets", erschienen 2020 bei Kress, zu finden. Zwei beispielhafte Ansätze werden im Folgenden zusammengefasst.

So wird in der US 2020/183 169 A1 ein refraktives und statisches Strahlteiler-Array mit einem Zeilendisplay und einem scannenden Spiegel kombiniert. Der scannende Spiegel, der auch ein Spiegel-Array sein kann, hat die Funktion aus dem eindimensionalen Zeilendisplay ein zweidimensionales Bild zu erzeugen. Somit wird das Licht des Zeilendisplays gescannt und anschließend an unterschiedlichen Orten, bzw. unter unterschiedlichen Winkeln in ein statisches Strahlteiler-Array eingekoppelt. Aufgrund der Grenzwinkel für die totale innere Reflexion und des Auftretens von Streulicht lassen sich in diesem Ansatz virtuelle Objekte jedoch nur in einem sehr reduzierten Unterbereich des natürlichen menschlichen Sichtfeldes einspiegeln.

Die US 7,457,040 B2 offenbart einen auf einer totalen inneren Reflexion basierenden Strahlteiler. Das Licht eines auf unendlich fokussierten Bildes wird in diesem Strahlteil eingekoppelt und mittels einer Vielzahl an halbtransparenten Spiegeln wird die Eintrittsöffnung des optischen Systems mehrfach ausgekoppelt. Daraus resultiert eine große Austrittsöffnung, wie sie für ein größeres nutzbares Sichtfeld für die virtuellen Objekte erforderlich ist. Entsprechend kann man das Display mit einer vergleichsweisen kleinen Optik und Eintrittsöffnung nutzen. Nachteilig wird dabei jedoch die Lichtintensität aufgrund der mehrfachen Ausspiegelung signifikant reduziert. Ähnlich der im letzten Absatz beschriebenen Lösung ist auch hier durch den Grenzwinkel für die totale innere Reflexion der nutzbare Winkelbereich deutlich begrenzt.

Grundsätzlich lässt sich festhalten, dass reflektierende Wellenleiter-Strahlteiler und diffraktive Wellenleiter-Strahlteiler, welche auf dem Prinzip der totalen inneren Reflexion beruhen, generell den Nachteil haben, dass sich der optische Weg aufgrund des Hin- und Herspiegelns verlängert. Dadurch wandern Lichtstrahlen, welche nicht genau auf einer Zentralachse des optischen Systems laufen, im optischen System zur Seite hin weg. Als Folge müssen zum Erhalt der Bildqualität entsprechende optische Komponenten größer ausgebildet werden. Daher wird das System insgesamt größer und schwerer. Des Weiteren wird in solchen Systemen bevorzugt ein optisches Material mit einem besonders hohen Brechungsindex verwendet. Diese sind typischerweise jedoch vergleichsweise schwer, wodurch sich technologiebedingt ein erhöhtes Gewicht für die AR-Brille ergibt. Außerdem müssen die parallelen Grenzflächen, welche für die totale innere Reflexion genutzt werden, sehr exakt gefertigt werden, was die Fertigung erschwert. Zusätzlich bedingen die beschriebenen Ansätze, welche auf dem Prinzip der totalen inneren Reflexion beruhen, aufgrund ihres Wirkprinzips ein Einkoppelprisma um chromatische Aufspaltungen zu vermeiden. Ein derartiges Einkoppelprisma als zwingend vorhandenes optisches Element lässt sich jedoch nur sehr schwer in das Design einer gewöhnlichen Brille integrieren. So weichen die bekannten Lösungen in ihrem Formfaktor erheblich von gewöhnlichen aus dem Alltag bekannten Brillen ab.

Entsprechend stellt sich die Aufgabe, eine Brillen-Anzeigevorrichtung zum Anzeigen eines virtuellen Bildes in einem Sichtfeld eines Nutzers, eine AR-Brille, bereitzustellen, mittels welcher sich das virtuelle Bild in einem möglichst großen Unterbereich des Sichtfeldes, möglichst dem ganzen Sichtfeld des Nutzers, anzeigen lässt und deren Formfaktor möglichst dem einer gewöhnlichen Brille entspricht.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Ein Aspekt betrifft eine Brillen-Anzeigevorrichtung zum Anzeigen eines virtuellen Bildes in einem Sichtfeld eines Nutzers, kurz AR-Brille, mit einer Gestelleinheit, zumindest einer an der Gestelleinheit angebrachten zeilenförmigen Bildschirmeinheit zum Abstrahlen eines Lichtes als computergenerierte Bildinformation in eine erste Richtung, und zumindest zwei bevorzugt zumindest drei, besonders bevorzugt zumindest vier, an der Gestelleinheit angebrachten teiltransparenten Strahlteilereinheiten, welche ausgebildet sind als Scannereinheiten mit einer einheitlich festgelegten Scannerfrequenz betrieben zu werden, und welche dem Umlenken des in die erste Richtung abgestrahlten Lichtes der Bildschirmeinheit in einen zweiten Richtungsbereich dienen, wobei der zweite Richtungsbereich bei bestimmungsgemäßem Gebrauch der Brillen-Anzeigevorrichtung dem Sichtfeld des Nutzers zumindest teilweise, also teilweise oder ganz, entspricht. Das Sichtfeld des Nutzers kann insbesondere das natürliche menschliche Sichtfeld des Nutzers bezeichnen. Es kann beispielsweise mit einer horizontalten Ausdehnung von 220° und einer vertikalen Ausdehnung von 150° angenommen werden. Die Strahlteilereinheiten sind dabei zumindest bereichsweise teiltransparent, können aber insbesondere in optisch nicht wirksamen Bereichen, beispielsweise in Bereichen einer Mechanik oder Elektronik zum Bewegen der Strahlteilereinheiten, intransparent ausgeführt sein. Die Gestelleinheit kann entsprechende Untereinheiten aufweisen, beispielsweise zwei Bügeleinheiten zum Halten der Gestelleinheit an jeweiligen Ohren des Nutzers, eine an den beiden Bügeleinheiten angeordnete Rahmeneinheit, an welcher die teiltransparenten Strahlteilereinheiten angebracht sein können und welche dem Aufsetzen auf eine Nase des Nutzers dient, sowie eine Zusatzrahmeneinheit, an welcher die Bildschirmeinheit angebracht sein kann.

Die erste Richtung und der zweite Richtungsbereich können dabei jeweils einen Richtungsbereich mit mehreren ähnlichen, d. h. um weniger als einen bestimmten Winkelbereich voneinander abweichenden Einzelrichtungen umfassenden Richtungen sein oder umfassen. Beispielsweise können die jeweiligen Einzelrichtungen von einer zentralen Hauptrichtung um weniger als ± 90°, weniger als ± 60°, weniger als ± 45°, weniger als ± 20° oder weniger als ± 5° abweichen. Die Abweichungen können auch richtungsabhängig vorgegeben werden, beispielsweise mit einer größeren Abweichung im horizontalen Sichtbereich des Nutzers und einer geringeren Abweichung im vertikalen Sichtbereich des Nutzers, insbesondere ± 90° im horizontalen Sichtbereich und/oder insbesondere ± 25° im vertikalen Sichtbereich. Die für die erste Richtung bzw. den zweiten Richtungsbereich angegebenen Relationen, also beispielsweise ein Aufeinander-Senkrechtstehen der ersten Richtung auf den zweiten Richtungsbereich, können sich dann jeweils auf die entsprechenden zentralen Hauptrichtungen beziehen. Bevorzugt sind die jeweiligen Richtungen bzw. Richtungsmengung dabei disjunkt, d. h. eine Einzelrichtung, welche zur ersten Richtung gehört, kann nicht zum zweiten Richtungsbereich gehören und umgekehrt. Insbesondere ist oder erfasst die erste Richtung eine im Schwerefeld vertikale Richtung, eine Hochrichtung, und/oder der zweite Richtungsbereich eine im Schwerefeld der Erde horizontale Richtung als Hauptrichtung. Bevorzugt ist die vertikale Richtung auch die Hauptrichtung der ersten Richtung bzw. ersten Richtungsmenge.

Entsprechend stehen erste Richtung und zweiter Richtungsbereich grundsätzlich quer zueinander, insbesondere zumindest im Wesentlichen senkrecht zueinander. Unter "im Wesentlichen" wird dabei hier und im Folgenden "bis auf eine vorgegebene Abweichung" verstanden, beispielsweise einer Abweichung von ± 35°, ± 15° oder ± 5°. Die erste Richtung ist also von dem zweiten Richtungsbereich verschieden. Die beschriebene Definition von "quer" ist hier allgemein gültig und gilt mutatis mutandis auch für "entlang" als im Wesentlichen parallel.

Die Strahlteilereinheiten können beispielsweise als Scannereinheiten realisiert werden, indem die Brillen-Anzeigevorrichtung auch eine Steuereinheit aufweist, welche mit der Bildschirmeinheit und den Strahlteilereinheiten elektronisch gekoppelt ist und die unterschiedlichen gekoppelten Einheiten entsprechend steuert. Das Koppeln erfolgt dabei bevorzugt über eine drahtgebundene Verbindung, kann jedoch auch drahtlos erfolgen. Die Synchronisation kann mittels Software oder einer elektrischen Kopplung der Aktuatoren der einzelnen Strahlteilereinheiten realisiert werden. Für jede Strahlteilereinheit kann dabei ein einzelner Aktuator oder zwei symmetrisch angeordnete Aktuatoren vorgesehen sein. Alternativ ist auch eine mechanische Kopplung möglich, gerade bei den unten eingeführten Rotations-Scannereinheiten.

Dadurch, dass der Strahlengang für das virtuelle Bild ausgehend vom Auge des Nutzers zuerst auf eine scannende und teiltransparente Strahlteilereinheit trifft, und danach auf eine zeilenförmige Bildschirmeinheit gelenkt wird, ergeben sich in der vorgestellten Kombination einige Vorteile. Primär lässt sich auf diese Weise ein großes Sichtfeld realisieren, und zwar bei der Einhaltung eines Formfaktors einer alltäglichen Brille. Die Mehrzahl von mit einheitlich festgelegter Scannerfrequenz scannenden, also synchron scannenden Scannereinheiten hat den Effekt, dass eine räumliche Dimension der Bildgebung im Strahlengang reduziert wird. Dadurch ist die zeilenförmige Bildschirmeinheit, beispielsweise ein linienartiges Display, ausreichend und es muss kein zweidimensionales Display abgebildet werden. Durch die menschlichen physiologischen Randbedingungen und aufgrund der Ausbildung der Brillen-Anzeigevorrichtung als kopfgetragene Brillen-Anzeigevorrichtung kann ein Display in einer horizontalen Querrichtung, sprich von rechts nach links oder links nach rechts, größer sein als in eine horizontale x-Richtung, d. h. vom Nutzer weg bzw. zum Nutzer hin, ohne dass hierfür von dem Formfaktor einer gewöhnlichen Brille abgewichen werden muss.

Zusätzlich vorteilhaft ist, dass sich zwischen der Bildschirmeinheit und den teiltransparenten Strahlteilereinheiten ein Linsenelement mit einer oder mehreren optischen Linsen, eine Optik, integrieren lässt, welche in x-Richtung verzerrungsfrei transparent erscheint, da sie in der x-Richtung als planparalleles Glas ausprägt sein kann und eine optische Wirkung des Linsenelementes aufgrund der in Hoch- und Querrichtung, z- und y-Richtung, gewählten gebogenen Form und der Verwendung eines Materials mit einem Brechungsindex (nur oder hauptsächlich) in der Hochrichtung, z-Richtung senkrecht zu x- und y-Richtung, erfolgt. Dies hat wiederum den Vorteil, dass vergleichsweise große Linsenelemente eingesetzt werden können, was für die einblendbaren virtuellen Objekte ein vergrößertes Sichtfeld erschließt, und gleichzeitig das Gesicht des Nutzers hinter der Optik, d. h. dem Linsenelement erkennbar bleibt. Dieser letzte Aspekt ist von besonderer Relevanz, da eine wichtige Anwendung der vorgestellten Brillen-Anzeigevorrichtung die Telekommunikation ist, in der die Mimik des Nutzers möglichst unverbaut und erkennbar bleiben soll. Weiterhin ist vorteilhaft, dass mit der beschriebenen AR-Brille durch die konkrete Wahl derTeilverspiegelung der Strahlteilereinheiten eine hohe Transparenz realisiert werden kann. Insbesondere kann in dem beschriebenen Aufbau erreicht werden, dass kein Licht der zeilenförmigen Bildschirmeinheit vom Auge weg in eine Umgebung des Nutzers gelenkt wird. Diesen Nachteil haben einige AR-Optiken aus dem Stand der Technik, bei welchen ein Teilstrahlengang, welcher vom Auge wegführt, zu dem ungewollten Effekt von für Betrachter in der Umgebung des Nutzers als leuchtend empfundenen Augen führt. Dies hat als weitere Konsequenz, dass die natürlichen Augen des Nutzers von außen nicht mehr gesehen werden können, was in dem Anwendungsfeld der Telekommunikation unerwünscht ist.

Die zeilenförmige Bildschirmeinheit und damit die gewählte längliche Ausprägung der zugehörigen Komponenten in y-Richtung und kleine Ausprägung in x-Richtung ermöglicht zudem weitere Vorteile bezüglich Gewicht und Gewichtsverteilung, insbesondere Massenschwerpunkt, der Brillen-Anzeige-vorrichtung. Um nämlich eine AR-Brille als gewöhnliche Brille tragen und empfinden zu können, darf zum einen das Gewicht nicht zu hoch werden. Als ungefähre Grenze werden im Allgemeinen 80 Gramm betrachtet, wobei typische Gewichte für alltagsübliche Brillen eher im Bereich von ≤ 40 Gramm liegen. Ein erhöhtes Gewicht führt zu Druckstellen an Nase und Ohr, die sich nach einiger Zeit schmerzhaft bemerkbar machen können. Zum anderen ist die technische Realisierung eines Massenschwerpunktes zwischen Ohr und Nase wichtig, da nur so das Gewicht gleichmäßig zwischen Ohren und Nase aufgeteilt werden kann. Daher ist eine möglichst geringe Erstreckung der Brillen-Anzeigevorrichtung in x-Richtung vorteilhaft. Mit der beschriebenen Brillen-Anzeigevorrichtung ist dies möglich, da sich die Haupterstreckungsrichtung der zeilenförmigen Bildschirmeinheit entlang der y-Richtung nah am Kopf des Nutzers erstreckt. Da auch die teiltransparenten Strahlteilereinheiten eine Haupterstreckungsrichtung entlang der y-Richtung nah am Kopf des Nutzers aufweisen, entspricht das optische Funktionsprinzip den physiologischen und kommunikativen Bedingungen bzw. kommt ihnen entgegen.

In einer vorteilhaften Ausführungsform ist vorgesehen, dass die Strahlteilereinheiten ausgebildet sind, mit einer Reflexionsfläche für das von der Bildschirmeinheit abgestrahlte Licht jeweils um eine quer, d. h. zumindest im Wesentlichen senkrecht, zur ersten Richtung verlaufende Drehachse zu drehen oder zu schwingen. Die Drehachse kann beispielsweise parallel zur y-Richtung verlaufen. Die Strahlteilereinheit und/oder Reflexionsfläche hat entsprechend bevorzugt eine Haupterstreckungsrichtung, welche parallel zur Drehachse verläuft.

Dabei können die Strahlteilereinheiten beispielsweise als Oszillations-Scannereinheiten mit resonant schwingenden Spiegeln als teiltransparente Reflexionsflächen ausgebildet sein. Jeder Spiegel kann dabei mit einem eigenen Federelement ausgestattet sein. Die zu einer jeweiligen Strahlteilereinheit gehörige Reflexionsfläche schwingt dann bei bestimmungsgemäßem Gebrauch um die Drehachse, so dass der zweite Richtungsbereich durch die Winkelbereiche zwischen jeweiligen Endlagen der Reflexionsflächen der Strahlteilereinheiten vorgegeben ist. Dabei ist in den Endlagen eine Drehgeschwindigkeit der Reflexionsflächen null. Die Teiltransparenz kann beispielsweise dadurch technisch umgesetzt werden, indem für die Strahlteilereinheiten ein transparentes Material eingesetzt wird, welches gegebenenfalls mit einer Beschichtung versehen ist, beispielsweise ein Glas mit einer dielektrischen Beschichtung. Alternativ kann auch ein Polka-Dot-Ansatz gewählt werden, bei dem Löcher in einem vorgegebenen Teilungsverhältnis in eine reflektierende Oberfläche eingebracht werden. Dies hat zusätzlich den Vorteil, dass die Dämpfung der Luft beim Schwingen reduziert wird. Es kommen jedoch eine Vielzahl an bekannten schwingenden Spiegeln, teiltransparenten Spiegeln, und jeweiliger Antriebskonzepte in Frage, wie sie aus dem Stand der Technik bekannt sind. Beispielsweise können die Strahlteilereinheiten auch als Rotations-Scannereinheiten ausgebildet sein, deren jeweilige Reflexionsflächen sich um die Drehachse drehen. In diesem Fall ist der zweite Richtungsbereich dann durch die Breiten der jeweiligen Reflexionsflächen in einer Ebene senkrecht zur Drehachse vorgegeben. Streulicht an den Kanten der Reflexionsflächen kann vermieden werden, indem die Kanten geschwärzt werden und/oder die Kanten so geschliffen werden, dass aufgrund der Perspektive keine Kanten sichtbar sind. Nachteilig an der Ausbildung der Strahlteilereinheiten als Rotations-Scannereinheiten im Vergleich zu der Ausbildung als Oszillations-Scannereinheiten sind dabei der entstehende Drehimpuls und die gegebenenfalls Geräusche erzeugende Mechanik. Vorteilhaft ist die vereinfachte Ansteuerung und die konstante Winkelgeschwindigkeit.

In einer weiteren vorteilhaften Ausführungsform ist vorgesehen, dass die Strahlteilereinheiten ausgebildet sind, während eines Betriebes mit der einheitlichen Scannerfrequenz in einer (fest) vorgegebenen Phasenrelation zueinander zu stehen. Dabei sind insbesondere für zwei oder mehr Gruppen von Strahlteilereinheiten, welche bevorzugt jeweils aus nicht nächst benachbarten Strahlteilereinheiten bestehen, Phasen vorgegeben welche voneinander abweichen. Es wird also zwischen den jeweiligen Gruppen ein Phasenversatz für die Strahlteilereinheiten fest vorgegeben derart, dass die Strahlteilereinheiten jeder Gruppe aufgrund identischer Phasen jeweils dauerhaft oder konstant parallel zueinander verlaufende Reflexionsflächen haben, die Reflexionsflächen von Strahlteilereinheiten unterschiedlicher Gruppen jedoch nicht dauerhaft oder konstant parallel zueinander verlaufen. Die Strahlteilereinheiten einer Gruppe befinden sich somit während eines Betriebes in derselben Phase. Eine solche Gruppe kann auch sämtliche Strahlteilereinheiten umfassen, so dass alle Reflexionsflächen dauerhaft parallel zueinander verlaufen. Werden beispielsweise bei einer Einteilung in zwei Gruppen die Strahlteilereinheiten derart gesteuert, dass alle Strahlteilereinheiten mit dergleichen Scannerfrequenz schwingen, die Strahlteilereinheiten einer Gruppe aber zu den Strahlteilerelementen der jeweils anderen Gruppen eine Phasenverschiebung haben.

Das hat den Effekt, dass die zeilenförmige Bildschirmeinheit durch den Nutzer nie gleichzeitig über zwei benachbarte Strahlteilereinheiten beobachtbar ist. Damit kann mittels Software das virtuelle Bild, sprich die computergenerierte Bildinformation, dahingehend verändert werden, dass ein artefaktfreies virtuelles Bild entsteht. Die so vermeidbaren Artefakte entstehen, wenn die zeilenförmige Bildschirmeinheit beispielsweise mit dem oben genannten Linsenelement zwischen Bildschirmeinheit und den Strahlteilereinheiten nicht nach Unendlich abgebildet wird. In diesem Fall wirkt sich ein vertikaler Versatz der Strahlteilereinheiten dahingehend aus, dass das virtuelle Bild vertikal verschoben dargestellt wird. Entsprechend überlappen sich, falls sämtliche Strahlteilereinheiten mit der gleichen Phase betrieben werden Teilbereiche des vertikalen Bildes. Als Folge entstehen Doppelbilder, die genannten und mit Gruppierung der Strahlteilereinheiten vermeidbaren Artefakte. Die Aufteilung in zwei (oder mehr) Gruppen von Strahlteilereinheiten in Kombination mit einer winkelabhängigen vertikalen Verschiebung in der computergenerierten Bildinformation, der Artefakt-Korrektur, verhindert somit das Entstehen der Doppelbilder. Analog kann auch das Artefakt einer Vergrößerung korrigiert werden.

In einer weiteren vorteilhaften Ausführungsform ist vorgesehen, dass die Strahlteilereinheiten in einer Hochrichtung, insbesondere der ersten Richtung, betrachtet hintereinander angeordnet sind, so dass auf eine jeweilige Strahlteilereinheit von der Bildschirmeinheit abgestrahltes Licht trifft, welches zuvor diejenigen der anderen Strahlteilereinheiten durchlaufen (transmittiert) hat, welche zwischen der jeweiligen Strahlteilereinheit und der Bildschirmeinheit angeordnet sind. Bevorzugt nimmt dabei ein Abstand der nächstbenachbarten Strahlteilereinheiten von oben nach unten, also mit zunehmender Entfernung von der Bildschirmeinheit, zu.

Das ist nicht nur für den Formfaktor der Brillenanzeigevorrichtung vorteilhaft, sondern es lässt sich auch auf einfache Weise eine Wahl für die Transparenz bzw. Reflektanz der semi-transparenten Strahlteilereinheiten treffen, welche zu einer in der Hochrichtung homogenen Intensität des virtuellen Bildes führt. Dabei setzt sich eine Intensität I_{AR} des virtuellen Bildes aus den Intensitäten der einzelnen Teilspiegel I₁ bis Iᵢ zusammen, welche eine Reflektanz R besitzen, und somit eine Transmission von (1-R). Mit konstanter Intensität I_{D} der Bildschirmeinheit ergeben sich somit unterschiedliche Teilverspiegelungen, für die beispielhafte Anzahl von i=6 Strahlteilereinheiten mit konstanter Intensität des virtuellen Bildes I_{AR} = I₁ = I₂ = .. = I₆ = const. und I₁ = R₁ * I_{D}, I₂ = (1-R₁)* R₂ * I_{D}, ... I₆ = (1-R₁) * (1-R₂) * (1-R₃) * (1-R₄) * (1-R₅) * R₆ * I_{D}, und damit beispielsweise R₆ = 30 %, R₅ = 23 %, R₄ = 19 %, R₃ = 16 %, R₂ = 14 % und R₁ = 12 %. In diesem Fall wird somit die gleiche Menge Licht pro teiltransparentem Strahlteiler zum Auge des Nutzers reflektiert. Für die Durchsicht und somit die Wahrnehmung der realen Umgebung durch den Nutzer ergibt sich so jedoch eine Abnahme der Transmission, was unter Umständen von einigen Nutzern als unangenehm empfunden werden kann. Entsprechend kann alternativ auch mit einer konstanten Reflektanz von beispielsweise R = 20 % gearbeitet werden und zusätzlich die Intensität des Displays in Abhängigkeit des vertikalen Lichtes, d. h. einer Winkelstellung der Strahlteilereinheiten, so variiert werden, dass das virtuelle Bild mit einer konstanten Intensität über das gesamte vertikale Sichtfeld wahrgenommen wird.

In einer anderen vorteilhaften Ausführungsform ist vorgesehen, dass die erste Richtung bei bestimmungsgemäßem Gebrauch der Brillenanzeigevorrichtung die Hochrichtung ist und die zeilenförmige Bildschirmeinheit in der Hochrichtung über den Strahlteilereinheiten angeordnet ist. Dies realisiert die oben beschriebenen Vorteile von Formfaktor, Gewicht, und größtmöglicher Erschließung des Sichtfeldes für das virtuelle Bild besonders gut.

In einer weiteren vorteilhaften Ausführungsform ist vorgesehen, dass die Länge als Haupterstreckungsrichtung der zeilenförmigen Bildschirmeinheit um zumindest eine Größenordnung, d. h. den Faktor 10, insbesondere um zumindest 1,5 Größenordnungen, also den Faktor 50, größer ist als eine quer zur Länge verlaufende Breite der zeilenförmigen Bildschirmeinheit. Insbesondere verlaufen Breite und Länge der Bildschirmeinheit hier quer zur ersten Richtung. Auch diese Gestaltung hat den Vorteil, dass sich die beschriebenen Vorteile hinsichtlich Formfaktor, Gewichtsverteilung und für das virtuelle Bild erschlossene Sichtfeld besonders zweckmäßig erreichen lassen.

In einer anderen vorteilhaften Ausführungsform ist vorgesehen, dass die zeilenförmige Bildschirmeinheit eine Pixelzeile, insbesondere genau eine Pixelzeile, von Bildpunkten (Pixeln) aufweist, welche jeweils durch entlang der Zeile alternierend angeordnete unterschiedliche Farb-Sub-Bildpunkte gebildet werden. Die Farb-Sub-Bildpunkte (Subpixel) können dabei beispielsweise Rot-, Grün- oder Blau-Sub-Bildpunkte sein oder umfassen. Beispielsweise können die Farb-Sub-Bildpunkte in einem R-G-B-R-G-B..-Schema angeordnet sein. Damit kann eine besonders schmale zeilenförmige Bildschirmeinheit realisiert werden. Die Bildschirmeinheit kann auch mehrere solcher Pixelzeilen aufweisen.

In einer anderen vorteilhaften Ausführungsform kann vorgesehen sein, dass die zeilenförmige Bildschirmeinheit mehrere (insbesondere parallele) Subpixel-Zeilen jeweiliger Farb-Sub-Bildpunkte aufweist. Dabei ist den Subpixel-Zeilen jeweils eine spezifische Farbe, beispielsweise Rot oder Grün oder Blau zugeordnet. Die Bildpunkte einer Subpixel-Zeile haben also eine (einzige) Farbe, so beispielsweise für eine rote Subpixel-Zeile in einem R-R-R-....-Schema angeordnet.

Insbesondere kann die zeilenförmige Bildschirmeinheit von jeder dieser Subpixel-Zeilen mit Farb-Sub-Bildpunkten einer Farbe genau eine aufweisen oder von zumindest einer dieser Subpixel-Zeilen mehr oder weniger als von den anderen Subpixel-Zeilen. Es können also entlang der Haupterstreckungsrichtung der Bildschirmeinheit jeweilige Farb-Subpixel-Bande als einfarbige Subpixel-Zeilen angeordnet sein. Mit unterschiedlichen Anzahlen an Subpixel-Zeilen für jeweilige spezifische Farben lassen sich beispielsweise technologisch bedingte Unterschiede in der Leuchtkraft der jeweiligen Farb-Subpixel der Subpixel-Zeilen kompensieren, so dass beispielsweise weniger effiziente blaue Subpixel der blauen Subpixel-Zeile dadurch kompensiert werden können, dass eine weitere blaue Subpixel-Zeile in der zeilenförmigen Bildschirmeinheit vorhanden ist. Insgesamt können durch mehrere Pixel- oder Subpixel-Zeilen größere Intensitäten des durch die zeilenförmige Bildschirmeinheit abgestrahlten Lichtes realisiert werden.

Mehrere örtlich versetzte Pixelzeilen oder Subpixel-Zeilen werden durch die Strahlteilereinheiten mit einem zeitlichen Versatz abgescannt, der jedoch zu gering für eine Wahrnehmung durch einen menschlichen Nutzer ist. Wird der dem örtlichen Versatz der unterschiedlichen Zeilen entsprechende durch die Scannerfrequenz bestimmte zeitliche Versatz in einer zeitlich versetzten Ansteuerung der Zeilen der Bildschirmeinheit berücksichtigt, ergibt sich die Möglichkeit für jeden resultierenden Pixel im virtuellen Bild eine Farbinformation als Überlagerung der Farbinformationen der unterschiedlichen Zeilen darzustellen.

In einer weiteren vorteilhaften Ausführungsform ist vorgesehen, dass die zumindest eine Zeile oder die Subpixel-Zeilen (einer Art) der zeilenförmigen Bildschirmeinheit in Form von jeweiligen Instanzen jeweils mehrfach ausgeführt sind, insbesondere 8-fach ausgeführt sind. Jede Instanz der Pixel-Zeile bzw. der Subpixel-Zeilen ist dabei ausgebildet, mit einer spezifisch für jede Instanz unterschiedlich vorgegebenen Maximalhelligkeit betrieben zu werden. Entsprechend kann bei bestimmungsgemäßem Gebrauch die Brillen-Anzeigevorrichtung jedes Pixel bzw. Subpixel einer Instanz nur zwischen zwei Betriebsmodi, nämlich einem ausgeschalteten Betriebsmodus "Off" und einem angeschalteten Betriebsmodus "On" mit der vorgegebenen Maximalhelligkeit umgeschaltet werden. Die Maximalhelligkeit kann dabei fest, also unveränderlich, oder in einem Schema veränderlich, beispielsweise in einem sogenannten Bit-Plane-Schema dynamisch vorgegeben sein. Die Helligkeit aller Pixel einer Instanz (Zeile) ist somit beispielsweise über einen Strom global schaltbar, so dass eine Helligkeitssteuerung nicht über eine Regelung der Pulsbreite, was eine Alternative wäre, gesteuert werden muss. Entsprechend muss pro Pixel nur ein An oder Aus realisiert werden und die Helligkeit kann global für die ganze jeweilige instanzbildende Zeile eingestellt werden. Die Helligkeit eines virtuellen Bildpunktes entspricht dann der aufsummierten Helligkeit der dem virtuellen Bildpunkt zugeordneten Pixel in den unterschiedlichen Instanzen. Dies vereinfacht die Ansteuerung bei den hohen Schaltfrequenzen, die in dem hier beschriebenen Ansatz in der Bildschirmeinheit ohnehin auftreten, erheblich. Ein weiterer Vorteil ist, dass, falls LEDs in der Bildschirmeinheit genutzt werden, diese immer nur kurz mit maximaler Leistung angesteuert werden und somit kurzzeitig eine höhere Maximalintensität erreicht werden kann. Dies kann mit dem beschriebenen flexibel vorgegebenen Schema zu Maximalhelligkeit realisiert werden, beispielsweise indem eine Helligkeitssequenz mit 1, 128, 2, 64, 4, 32, 8, 16 als jeweilige Maximalhelligkeitswerte für die unterschiedlichen Instanzen nacheinander realisiert wird. Jede Instanz hat dann für jeden Scanvorgang eine individuell durch das Schema vorgegebene Maximalhelligkeit, welche im nächsten Scanvorgang durch den nächsten Maximalhelligkeitswert in dem Bit-Plane-Schema vorgegeben ist.

In einer weiteren vorteilhaften Ausführungsform ist vorgesehen, dass an der Gestelleinheit mehrere in ihrer jeweiligen Haupterstreckungsrichtung zumindest im Wesentlichen parallel verlaufende zeilenförmige Bildschirmeinheiten angebracht sind, welche jeweils in der Hochrichtung in einem unterschiedlichen Abstand von den Strahlteilereinheiten und/oder dem weiter unten noch eingeführten zwischen Strahlteilereinheiten und Bildschirmeinheit angeordneten Linsenelement angeordnet sind. Die zeilenförmigen Bildschirmeinheiten können durch eine jeweilige Verschiebung in x- und z-Richtung positioniert werden, ohne dass es zu einer gegenseitigen Verdeckung kommt. Das hat den Vorteil, dass das sogenannte Vergence-Accommodation-Problem der AR-Brillen beseitigt werden kann. Das Vergence-Accommodation-Problem ergibt sich daraus, dass AR-Brillen als 3D-Brillen ausgelegt sind und entsprechend virtuelle Objekte in beliebigen Entfernungen positioniert einblenden können. Allerdings hat die Bildschirmeinheit stets eine Fokuslage in definierter Entfernung.

Dadurch existiert nur genau eine Entfernung, in welcher virtuelle Objekte angezeigt werden können, bei welcher das Auge auch auf diese natürliche Entfernung fokussiert ist. Gerade bei AR-Brillen, die auch einen ungestörten Blick auf die natürliche Umgebung ermöglichen, fällt es Nutzern auf, wenn reale und virtuelle Objekte bezüglich ihrer 3D-Information in der gleichen Entfernung positioniert sind, jedoch auf eine andere Entfernung fokussiert werden muss um das virtuelle Objekt in dieser Entfernung scharf sehen zu können. Mit der Verwendung von zwei oder mehr der entlang zueinander verlaufenden zeilenförmigen Bildschirmeinheiten kann somit je nach Abstand des virtuellen Objektes ein anderes Display genutzt werden. Durch die Verwendung mehrerer zeilenförmiger Bildschirmeinheiten in unterschiedlichem Abstand kann es zu Artefakten kommen, welche sich jedoch mit dem Festlegen von zwei oder mehr Gruppen von Strahlteilereinheiten behoben werden, welche wie oben beschrieben in einer jeweiligen vorgegebenen festen Phasenrelation zueinander stehen. Aufgrund der begrenzten Schärfentiefe des menschlichen Auges sind dabei bereits wenige Bildschirmeinheiten ausreichend, um das Vergence-Accommodation-Problem zu beheben.

In einer weiteren vorteilhaften Ausführungsform ist vorgesehen, dass zwischen den Strahlteilereinheiten und einer Augenposition, welche bei bestimmungsgemäßem Gebrauch der Brillen-Anzeigevorrichtung von einem Auge des Nutzers eingenommen wird, ein Linsenelement, insbesondere mit oder aus einer Dispersionslinse angeordnet ist, und/oder zwischen den Strahlteilereinheiten und einer Umgebung, welche bei bestimmungsgemäßem Gebrauch der Brillen-Anzeigevorrichtung von dem Nutzer durch die Strahlteilereinheiten hindurch betrachtbar ist, ein Linsenelement, insbesondere mit oder aus einer Fokussierlinse, angeordnet ist. Es kann also an der Innenseite der Brillen-Anzeigevorrichtung eine Dispersionslinse und an einer Außenseite der Brillen-Anzeigevorrichtung eine Fokussierlinse angeordnet sein. Das Linsenelement an der Innenseite, also zwischen Strahlteilereinheiten und Augenposition, kann dabei dafür sorgen, dass das virtuelle Bild näher an den Nutzer herangerückt wird. Die an der Außenseite angebrachte Fokussierlinse kann durch eine entsprechende inverse Brennweite diesen Effekt für reale Objekte kompensieren, so dass der Blick durch die Strahlteiler hindurch auf die natürliche Umgebung nicht durch die an der Innenseite angebrachte Linsenelemente verfälscht wird. Das an der Innenseite angebrachte Linsenelement ermöglich somit Strahlengänge innerhalb der AR-Brille, die nach unendlich abgebildet sind und somit zu keinen Artefakten führen, wenn der Strahlengang durch zwei benachbarte Strahlteiler gleichzeitig betrachtet wird, während alle Strahlteiler parallel schwingen und gleichzeitig wird das virtuelle Bild aufgrund des Linsenelements in einer endlichen Entfernung wahrgenommen. Alternativ ist auch ein phasenverschobenes Scannen durch die Strahlteilereinheiten möglich, d. h. dem Vorgeben von zwei oder mehr Gruppen von Strahlteilereinheiten aus nicht nächstbenachbarten Strahlteilereinheiten mit jeweils für diese Gruppen fest vorgegebenen, unterschiedlichen Phasen wie oben beschrieben, können für virtuelle Objekte auch ohne die beschriebenen Linsenelemente unterschiedliche Entfernungen vorgegeben werden.

In einer weiteren vorteilhaften Ausführungsform ist vorgesehen, dass zwischen den Strahlteilereinheiten und der Bildschirmeinheit ein weiteres Linsenelement, insbesondere mit oder aus einer Fokussierlinse angeordnet ist. Insbesondere weist das Linsenelement dabei zwei längs der ersten Richtung, bevorzugt längs der y- und z-Richtung, verlaufende planparallele Grenzflächen auf. Das weitere Linsenelement ist somit hinsichtlich des von der Bildschirmeinheit abgestrahlten Lichtes optisch aktiv, hinsichtlich eines aus der oder in die Umgebung gelangenden Lichtes entsprechend des zweiten Richtungsbereiches jedoch optisch neutral, so dass das weitere Linsenelement für eine dem Nutzer gegenüber befindliche Person wie von Fensterscheiben bekannt verzerrungsfrei durchsichtig ist. Damit bleibt die menschliche Mimik hinter der Optik besser erkennbar, was gerade für die Telekommunikation wie bereits beschrieben, vorteilhaft ist.

In einer weiteren vorteilhaften Ausführungsform ist eine an der Gestelleinheit angebrachte Blendeneinheit vorgesehen. Die Blendeneinheit weist dabei eine quer zur ersten Richtung verlaufende Blende und/oder eine parallel zu einer von den Strahlteilereinheiten aufgespannten Ebene, dery-z-Ebene, Blende auf, um von den der Strahlteilereinheiten umgelenktes Licht der Bildschirmeinheit gegen aus zur ersten Richtung benachbarten Richtungen einfallendes Licht abzuschirmen. Derartiges Licht hat nämlich als Streulicht Potenzial, das virtuelle Bild zu verschlechtern. Je nach Orientierung des Auges des Nutzers, geradeaus, oben oder unten, sind dabei Lichter aus unterschiedlichen zur ersten Richtung benachbarten Richtungen besonders schädlich. Diese Lichter können mit den beiden beschriebenen Blenden besonders effektiv abgeschirmt werden.

Die vorstehend in der Beschreibung, auch im einleitenden Teil, genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Anhand der in den nachfolgenden Figuren gezeigten schematischen Zeichnungen soll der erfindungsgemäße Gegenstand näher erläutert werden, ohne diesen auf die hier gezeigten spezifischen Ausführungsformen einschränken zu wollen. Dabei zeigt:
- Fig. 1: eine beispielhafte Ausführungsform einer Brillen-Anzeigevorrichtung zum Anzeigen eines virtuellen Bildes in einem Sichtfeld eines Nutzers in einer perspektivischen Frontalansicht;
- Fig. 2: die beispielhafte Ausführung aus Fig. 1 in einer schematischen Seiten-Schnittansicht;
- Fig. 3: beispielhafte Situationen für das virtuelle Bild verschlechterndes Streulicht;
- Fig. 4: unterschiedliche Details einer weiteren beispielhaften Ausführungsform einer Brillen-Anzeigevorrichtung;
- Fig. 5: unterschiedliche beispielhafte Ausführungsformen von zeilenförmigen Bildschirmeinheiten;
- Fig. 6: einen Überblick über eine weitere beispielhafte Brillen-Anzeigevorrichtung;
- Fig. 7: eine Illustration zu einer beispielhaften Ausführungsform einer Brillen-Anzeigevorrichtung mit Rotations-Scannereinheiten.

In den Figuren sind dabei gleiche und funktionsgleiche Elemente mit den gleichen Bezugszeichen versehen.

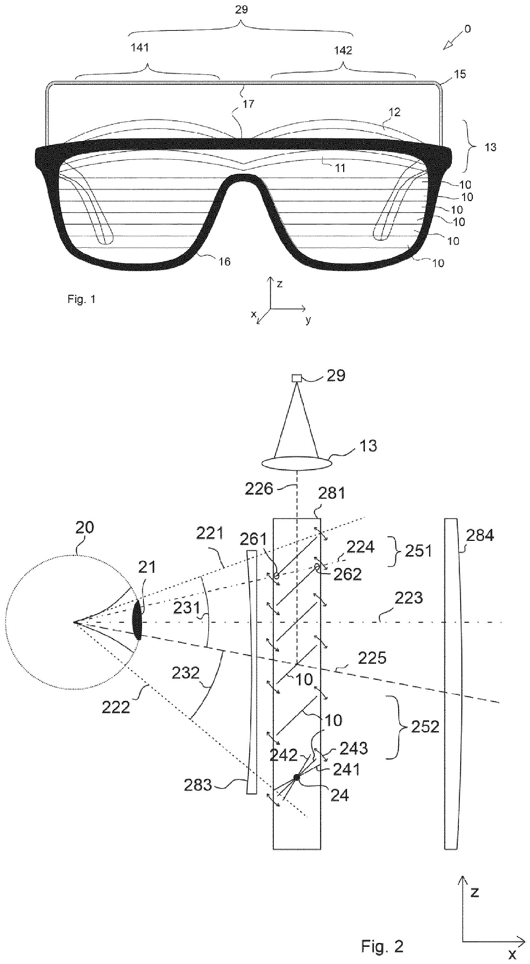

Fig. 1 zeigt eine beispielhafte Ausführungsform einer Brillen-Anzeigevorrichtung zum Anzeigen eines virtuellen Bildes in einem Sichtfeld eines Nutzers. Die Brillen-Anzeigevorrichtung 0 weist dabei eine Gestelleinheit 17 mit vorliegend einer Rahmeneinheit 16 und einer Zusatzrahmeneinheiz 15 auf. An der Gestelleinheit 17, vorliegend der Rahmeneinheit 15, ist der in der gezeigten Ausführungsform eine zeilenförmige Bildschirmeinheit 29 angeordnet, von der zwei Teilbereiche 141, 142 dem rechten bzw. linken Auge 20 (Fig. 2) des Nutzers zugeordnet sind. Die zeilenförmige Bildschirmeinheit 29 dient dabei dem Abstrahlen eines Lichtes entlang eines Strahlenganges 226 (Fig. 2) als computergenerierte Bildinformation in eine erste Richtung, hier der negativen z-Richtung. Die Brillenanzeigevorrichtung 0 weist auch mehrere an der Gestelleinheit 17, vorliegend der Rahmeneinheit 16, angebrachte teiltransparente Strahlteilereinheiten 10 auf, welche ausgebildet sind als Scannereinheiten mit einer einheitlich festgelegten Scannerfrequenz betrieben zu werden, um das von der Bildschirmeinheit 29 in die erste Richtung, die negative z-Richtung, abgestrahlte Licht in einen zweiten Richtungsbereich umzulenken, der bei bestimmungsgemäßem Gebrauch der Brillen-Anzeigevorrichtung 0 dem Sichtfeld des Nutzers entspricht. Vorliegend verläuft der zweite Richtungsbereich im Wesentlichen entlang der negativen x-Richtung.

Zwischen den Strahlteilereinheiten 10 und der Bildschirmeinheit 29 ist vorliegend ein weiteres Linsenelement 13, hier eine sog. Pancake-Optik mit zwei Linsen 11, 12 angeordnet. In der Zeichnungsebene, also in der y-z-Ebene, weist das Linsenelement 13 vorliegend zwei (folglich längs der ersten Richtung verlaufende) planparallele Grenzflächen auf, so dass es für einen betrachtenden Dritten nicht zur verzerrenden Wiedergabe der Mimik des Nutzers kommt. Die Strahlteilereinheiten 10 sind dabei in einer Hochrichtung, hier der positiven z-Richtung betrachtet, hintereinander, d. h. in der z-Richtung übereinander angeordnet, so dass auf eine jeweilige Strahlteilereinheit 10 von der Bildschirmeinheit 29 abgestrahltes Licht trifft, welches zuvor diejenigen der anderen Strahlteilereinheiten 10 durchlaufen hat, welche zwischen der jeweiligen Strahlteilereinheit 10 und der Bildschirmeinheit 29 angeordnet sind. Mit zunehmendem Abstand von der Bildschirmeinheit 29 erhöht sich im gezeigten Beispiel auch der Abstand der Strahlteilereinheiten 10 untereinander.

Im vorstehenden Beispiel sind pro Auge sechs als Scannereinheiten ausgebildete teiltransparente Strahlteilereinheiten 10 dargestellt, welche eine jeweilige Rotations- oder Drehachse 24 (Fig. 2) entlang dery-Achse haben. Dadurch, dass die Strahlteilereinheiten 10, beispielsweise mit einer entsprechenden Steuereinheit, dazu ausgebildet sind, mit einer einheitlich festgelegten Scannerfrequenz betrieben zu werden, wird erreicht, dass die einzelnen Scannereinheiten mit zugeordneten teiltransparenten Reflexionsflächen zueinander synchron schwingen. Synchron bedeutet in diesem Fall, dass die relative Phase der Strahlteilereinheiten zueinander konstant ist. Das weitere Linsenelement 13 bildet die zeilenförmige Bildschirmeinheit 29 so ab, dass diese über die teiltransparenten Strahlteilereinheiten 10 vom Auge 20 (Fig. 2) des Nutzers in einem großen Teil des natürlichen menschlichen Sichtfeldes gesehen werden kann. Das für das virtuelle Bild nutzbare Sichtfeld wird dabei horizontal durch die Erstreckung der Strahlteilereinheiten 10, der Optik 13 und der zeilenförmigen Bildschirmeinheit 29 in y-Richtung bestimmt. In vertikaler Richtung wird das für das virtuelle Bild nutzbare Sichtfeld durch die mechanische Auslenkung der Scannereinheiten 10 bestimmt, deren Breite quer zu ihrer Haupterstreckungsrichtung und durch die Anzahl der verwendeten Scannereinheiten 10, da jede einzelne Scannereinheit nur einen Teilbereich des vertikalen Sichtfeldes abdecken kann.

Im gezeigten Beispiel ist das weitere Linsenelement 13 derart ausgeprägt, dass durch die Linsen 11, 12 aus frontaler Richtung, d. h. in negativer x-Richtung verzerrungsfrei durchgeblickt werden kann. Dies ist möglich, da die Linsen 11, 12, streifenartig in x-Richtung ausgeschnitten sind, also eine signifikant längere Ausprägung in y-Richtung haben als in x-Richtung. Unter "signifikant" kann hier beispielsweise ein Unterschied von zumindest einer Größenordnung verstanden werden, beispielsweise eine Ausdehnung von 6 mm in x-Richtung und 70 mm in y-Richtung. Im vorliegenden Beispiel ist die Pancake-Optik für das weitere Linsenelement 13 in ihrer Ausgestaltung exemplarisch gewählt und kann auch durch andere Optiken ersetzt werden.

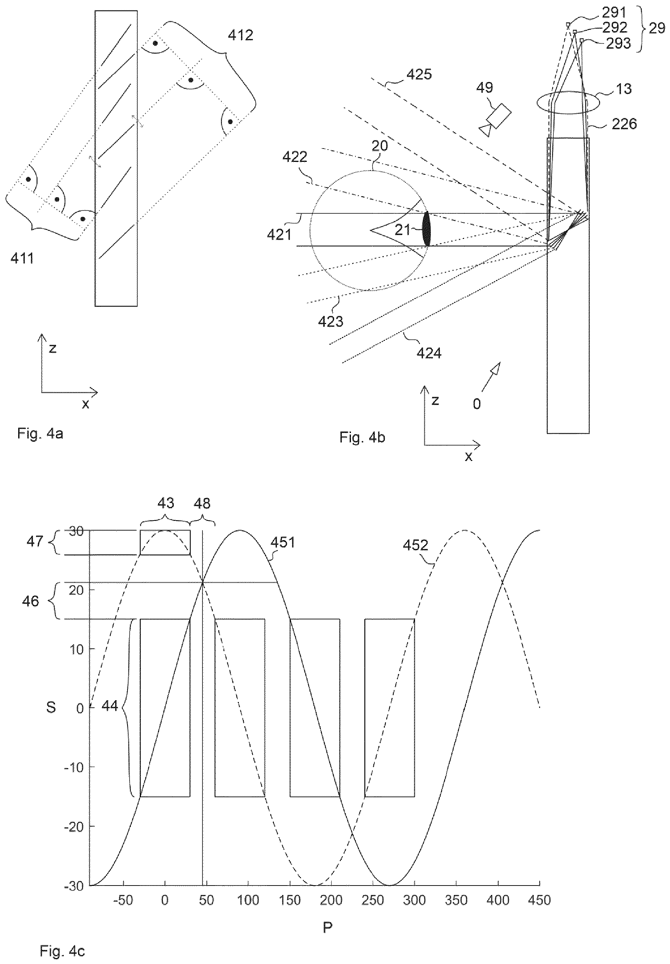

In Fig. 2 ist eine schematische Seiten-Schnittansicht der Brillen-Anzeigevorrichtung aus Fig. 1 gezeigt. Das Auge 20 des Nutzers blickt durch eine Pupille 21 auf die Anordnung der als Scannereinheiten ausgebildeten und damit scannenden Strahlteilereinheiten 10, welche jeweils um ihre Drehachse 24 rotieren. Dabei weisen die Strahlteilereinheiten 10 einen mechanischen Winkelbereich 243 zwischen zwei Endlagen 241, 242 auf. Dieser mechanische Winkelbereich 243 bedingt einen optischen Winkelbereich 231, 232, welcher als zweiter Richtungsbereich dem durch das virtuelle Bild nutzbaren Sichtfeld des Nutzers entspricht. Grundsätzlich kann hier der mechanische Winkelbereich 243 auch größer gewählt werden, wobei dann die zeilenförmige Bildschirmeinheit 29 nur genutzt wird, wenn ein Strahlgang innerhalb der Begrenzungen 221, 222 verläuft. Die Begrenzung 221, 222 entsprechen vorliegend dem natürlichen menschlichen Sichtfeld des Nutzers. Dieser Sichtbereich ist symmetrisch um eine zentrale Hauptrichtung 225 angeordnet, welche bevorzugt auch die Mitte des mechanischen Scan- bzw. Winkelbereichs 243 sein sollte. Optimalerweise wird die Ausrichtung der teiltransparenten Strahlteilereinheiten 10 in Ruhelage so gewählt, dass paralleles Licht entlang dem Strahlengang 226 aus der Bildschirmeinheit 29 in die Richtung 225 umgelenkt wird. Dabei werden die Strahlteilereinheiten 10 synchron, d. h. alle mit der gleichen Scannerfrequenz betrieben. Es kann, wie weiter unten in Fig. 4 noch erläutert, eine Ausprägung mit relativer Phasenverschiebung zwischen einzelnen Strahlteilereinheiten 10 gewählt werden, oder, wie in der vorliegenden Figur gezeigt, ohne Phasenverschiebung zwischen unterschiedlichen Strahlteilereinheiten 10. In diesem letzteren Fall sind die Reflexionsflächen aller teiltransparenten Strahlteilereinheiten 10 parallel angeordnet.

Die Strahlteilereinheiten 10 sind in diesem Beispiel zueinander in der z-Richtung in einem vertikalen Abstand 251, 252 übereinander positioniert, welcher sich je nach Höhe in der z-Richtung, nach vertikaler Lage im Sichtfeld, unterscheidet. Beispielsweise können die Strahlteilereinheiten 10 so nahe zueinander positioniert werden, dass ein Sicht-Strahlgang 224 vom Rotationszentrum des Auges 20 bzw. des Augapfels die untere Kante 261 einer oberen Strahlteilereinheit 10 schneidet und gleichzeitig die obere Kante 262 einer unteren Strahlteilereinheit 10 schneidet. Es sind aber auch engere Abstände und auch größere Abstände denkbar. Bei engeren Anordnungen kann ein Sicht-Strahlgang gleichzeitig von zwei Strahlteilereinheiten 10 umgelenkt werden. Damit dies nicht zu Bildartefakten führt, muss vorliegend das weitere Linsenelement 13 so ausgelegt sein, dass Lichtstrahlen nach unendlich abgebildet werden, d. h. ein paralleles umzulenkendes Lichtbündel vorliegt. Das virtuelle Bild kann dann durch ein konkaves Linsenelement 283 zwischen dem Nutzer und den Strahlteilereinheiten 10 wieder in einen endlichen virtuellen Abstand gerückt werden. Damit der Blick durch die Strahlteiler 10 auf die realen Objekte in der natürlichen Umgebung nicht durch das Linsenelement 283 verfälscht wird, kann dieses durch ein Linsenelement 282 mit inverser Brennweite an einer Außenseite der Brillenanzeigevorrichtung 0 wieder korrigiert werden. Die Linsenelemente 283 und 284 sind nicht mehr notwendig, wenn ein phasenverschobenes Scanning eingesetzt wird, wie es in Fig. 4 noch näher erläutert wird.

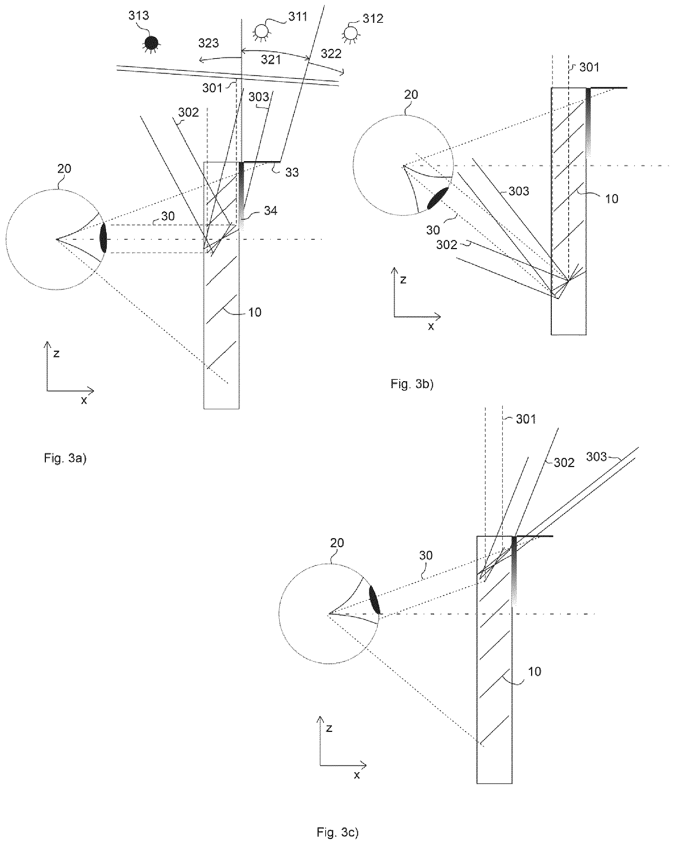

In Fig. 3 werden Strahlengänge betrachtet, die als Streulicht das Potential haben, das virtuelle Bild zu verschlechtern.

Fig. 3a zeigt dabei eine Situation mit einem horizontalen Geradeausblick, wodurch das Auge 20 auf einen Pixel des virtuellen Bildes fokussiert, welches in horizontaler Richtung, x-Richtung, sichtbar ist. Da die Strahlteilereinheiten 10 mit einer Scannerfrequenz von beispielsweise 50 Hertz die zeilenförmige Bildschirmeinheit scannen, werden in einem Scan-Zyklus auch andere Lichtquellen 311, 312 und 313 der natürlichen Umgebung für einen kurzen Zeitpunkt gemäß Strahlengang 30 dem betrachteten virtuellen Pixel überlagert. Diese Lichtquellen 311, 312 und 313 der natürlichen Umgebung können in drei Winkelbereiche 321, 322 und 323 eingeteilt werden.

Lichtquellen 313, welche sich in der gezeigten Darstellung links der Vertikalen im Winkelbereich 323 befinden, und sich damit in x-Richtungbetrachtet näher am Auge 20 befinden als die Bildschirmeinheit 29, werden zwar dem virtuellen Bild überlagert, jedoch wird hier auf Grund der Nähe der Brillen-Anzeigevorrichtung 0 zum Nutzer das Gesicht abgebildet. Da dieses nur extern beleuchtet wird, handelt es sich um einen vergleichsweise dunklen Bereich, der wie anhand von Grenz-Strahlengang 302 dargestellt nur eine geringe Menge an Streulicht beiträgt. Dieses gilt es im Verhältnis der vergleichsweise hellen zeilenförmigen Bildschirmeinheit 29 in dem Strahlengang 301 zu bewerten. Der Grenz-Strahlengang 302 entspricht vorliegend der Endlage 242 der zugehörigen Strahlteilereinheit 10.

Des Weiteren existiert ein Winkelbereich 322 von in x-Richtung hinreichend weit von der Brillen-Anzeigevorrichtung 0 entfernten Lichtquellen 312, welche nicht mehr als Streulicht über die scannenden Strahlteilereinheiten 10 wahrgenommen werden können. Es verbleibt somit der Winkelbereich 321 zwischen den anderen beiden Winkelbereichen 323, 322, in dem sich Lichtquellen 311 wie beispielsweise externe Lampen oder auch ein heller Himmel befinden kann, welche potentiell einen großen Beitrag an Streulicht beitragen können. Um nicht auf eine Kappe als Kopfbedeckung oder dergleichen angewiesen zu sein, kann mit Blenden 33, 34 gearbeitet werden, um diesen Winkelbereich 321 zu blockieren, in welchen vorliegend der Endlage 241 entsprechende Grenz-Strahlengang 303 führt. Die Blenden 33, 34 können dabei sowohl als horizontal ausgeprägte Blende 33 (Blende 33 mit horizontal, in x-y-Ebene, verlaufender Blendenebene) und/oder auch als vertikal ausgeprägte Blende 34 (Blende 34 mit vertikal, in z-y-Ebene, verlaufender Blendenebene) ausgeführt sein, beispielsweise als Verlaufstönung direkt auf dem Glas der Brillenanzeigevorrichtung 0.

In Fig. 3b ist gezeigt, dass die Streulichtproblematik für Blickrichtungen nach unten, in negativer z-Richtung, weniger relevant wird, da das Streulicht dann zu einem vergrößerten Anteil aus dem Gesichtsbereich des Nutzers kommt und somit im Vergleich zu der Umgebung typischerweise vergleichsweise dunkel ist. Zusätzlich wird hier deutlich, dass es vorteilhaft ist, den für das virtuelle Bild genutzten Winkelbereich gegenüber der Horizontalen nach unten geneigt anzuordnen, zum Beispiel +20° von der Horizontalen nach oben und -40° von der Horizontalen nach unten.

In Fig. 3c ist visualisiert, dass die Blende 33, 34 besonders bei nach oben gerichtetem Auge 20 relevant wird, da die Strahlengänge 302, 303 dann beide in den Winkelbereich 321 führen. Hier ist bereits eine vergleichsweise kleine Blende 33, 34 ausreichend Streulicht effektiv zu reduzieren.

Die Streulichtbetrachtung zeigt auch, dass es vorteilhaft ist, für die Strahlteilereinheiten 10 eine verhältnismäßig geringe Reflektanz zu wählen, und lieber die Leuchtkraft des der zeilenförmigen Bildschirmeinheit 29 zu steigern als umgekehrt eine leuchtarme Bildschirmeinheit 29 in Kombination mit starker Reflektanz der Strahlteilereinheiten 10 zu wählen. Somit ergeben sich nämlich ein gesteigerter Kontrast gegenüber Streulicht und zusätzlich eine höhere Transparenz beim Durchblick auf reale Objekte in der natürlichen Umgebung des Nutzers.

In Fig. 4 ist eine Variante gezeigt, bei dem die Strahlteilereinheiten 10 in zwei unterschiedliche Gruppen 411, 412 eingeteilt wurden, welche alle mit der gleichen Scannerfrequenz schwingen, aber die Strahlteilereinheiten 10 der einen Gruppe 411 eine Phasenverschiebung gegenüber den Strahlteilereinheiten 10 der anderen Gruppe 412 haben. Somit wird die linienförmige Bildschirmeinheit 29 nie gleichzeitig über zwei benachbarte Strahlteilereinheiten 10 betrachtet. Damit kann die computergenerierte Bildinformation der zeilenförmigen Bildschirmeinheit 29 für jede Strahlteilereinheit 10 individuell generiert werden. Dadurch ergeben sich die Vorteile, dass sich Fertigungstoleranzen, kinematische Abweichungen und weitere Fehler per Software korrigieren lassen. So können beispielsweise auch nicht auf unendlich fokussiere Strahlengänge 226 realisiert werden und damit beispielsweise auf die obigen Linsenelemente 283, 284 verzichtet werden. Dadurch ergibt sich auch die Möglichkeit, mehrere zeilenförmige Bildschirmeinheiten 291, 292, 293 (Fig 4b) in unterschiedlicher Entfernung anzuordnen, um das sog. Vergence-Accommodation-Problem zu lösen.

In Fig. 4a ist dabei gezeigt, wie sich Strahlenteilereinheiten 10 in zwei alternierende Gruppen 411, 412 einteilen lassen, also in zwei Gruppen 411, 412, welche jeweils aus nicht nächstbenachbarten Strahlenteilereinheiten 10 bestehen und zusammen alle Strahlenteilereinheiten 10 enthalten. Innerhalb der jeweiligen Gruppe 411, 412 sind die Strahlteilereinheiten 10, dabei in Phase und somit mit ihren teiltransparenten Reflexionsflächen parallel zueinander ausgerichtet. Beide Gruppen 411, 412 haben auch die gleiche Scannerfrequenz, ihre Strahlteilereinheiten 10 sind jedoch zueinander phasenverschoben. In dem hier gezeigten Beispiel beträgt der Phasenversatz 90°, wobei eine sinusartige Oszillation pro vollständiger Oszillation 360° umfasst. In Fig. 4c ist dabei gezeigt, dass in diesem Beispiel eine maximale mechanische Auslenkung der Spiegel von ± 30° angenommen ist.

Mit den zwei Gruppen 411, 412 kann das virtuelle Bild für jede Strahlteilereinheit 10 effektiv individuell erzeugt werden, wie im Folgenden erläutert. Zur übersichtlicheren Darstellung ist hier in Fig. 4b nur eine einzige Strahlteilereinheit 10 als Scannereinheit dargestellt. Ausgehend von der Bildschirmeinheit 29 wird das Licht mit einem maximalen Winkel mit Strahlengang 425 bis zu einem minimalen Winkel mit resultierendem Strahlengang 424 ausgelenkt. Da die Pupille 21 nur eine vergleichsweise kleine Öffnung hat, sind die Strahlengänge 424 und 425 der Grenzsituationen nicht mehr für das menschliche Auge 20 sichtbar. Effektiv sichtbar sind nur Strahlengänge, bei denen noch zumindest ein kleines Strahlenbündel in die Pupille trifft, beispielsweise die Strahlenbündel 422 und 423. Somit ergibt sich pro Strahlteilereinheit 10 ein effektiver Scanbereich, der für die tatsächliche Bildentstehung relevant ist, und welcher kleiner als der technisch implementierte Scanbereich ist. Im hier gezeigten Beispiel liegt der effektive Scanbereich bei ± 7° um eine Ruhelage der Strahlteilereinheit 10. Dieser effektiv wirksame Winkelbereich pro Strahlteilereinheit 10 kann entweder für eine physikalische Pupillengröße ausgelegt werden, oder vergrößert werden um die Bewegung des Auges 20 mit berücksichtigen. Weil sich das Auge 20 immer neu ausrichtet, kann die Auslegung entsprechend mittels einer imaginären resultierenden, relativ zur realen Pupille vergrößerten Pupille 21 erfolgen. Eine weitere Alternative ist entsprechend die Verwendung eines Augen-Nachverfolgungs-Sensors 49 (Eye-Tracking). Damit kann der Winkelbereich fortlaufend gemessen werden und die Korrekturen in der Bildschirmeinheit 29 per Software fortlaufend angepasst werden. Vorzugsweise wird eine Mischung verwendet, wodurch sich der Vorteil ergibt, dass die Pupille 21 des Auges 20 nicht mit allzu hoher Präzision gemessen werden muss. Des Weiteren kann so eine Ausrichtung der Strahlteilereinheiten 10 auch für unterschiedliche Nutzer der Brillen-Anzeigevorrichtung 0 kontinuierlich nachgeregelt werden. Mit der Einteilung der Strahlteilereinheiten 10 in die beiden Gruppen 411, 412 kann sichergestellt werden, dass die Strahlgänge unterschiedlicher Strahlteilereinheiten 10 sich nicht in der Pupille 21 überlappen, sodass stets nur Licht einer einzigen Strahlteilereinheit 10 wahrgenommen wird. Dabei können die Strahlteilereinheiten 10 jedoch in z-Richtung mit so geringem Abstand zueinander angeordnet sein, dass dennoch eine in z-Richtung lückenlose Darstellung des virtuellen Bild ermöglicht ist.

In Fig. 4c sind die Schwingungszyklen der beiden Gruppen 411, 412 als Plot 451 bzw. 452 der mechanischen Winkelauslenkung S (y-Achse) über den Phasen der Oszillation P als (x-Achse) dargestellt. Der Bereich mit Höhe 44 (Richtung der y-Achse) und Breite 43 (Richtung de x-Achse) markiert die (idealerweise einzigen) Zeiten, zu denen die Bildschirmeinheit 29 eingeschaltet ist, also das Licht abstrahlt. Aufgrund der Phasenverschiebung hat der Plot 452 der zweiten Gruppe 412 zu diesen Zeiten mechanische Winkelauslenkungen im Bereich 47. Diese sind so groß, dass keine Strahlengänge von der Bildschirmeinheit 29 zum Auge 20 bzw. zur Pupille 21 führen. Die Phasenverschiebung zwischen den beiden Gruppen 411 und 412, sowie die maximale mechanische (Winkel-)Auslenkung ist so gewählt, dass es einen Zeitraum gibt, in dem kein Strahlengang gesehen werden kann, nämlich der Winkelbereich 46 und der Phasenbereich 48. Dieser Zeitraum kann konstruktiv auf null reduziert werden, indem gerade zu dem Zeitpunkt, in welchem Strahlengänge der ersten Gruppe 411 nicht mehr sichtbar sind, die Strahlengänge der zweiten Gruppe 412 sichtbar werden indem der Phasenbereich 48 minimiert wird.

Vorliegend wird in Fig. 4a ein größerer mechanischer Scanbereich, eine größere Winkelauslenkung genutzt, als für das Umlenken des Lichtes aus der Bildschirmeinheit 29 in die Pupille 21 notwendig wäre. Dies hat den Vorteil, dass im effektiv wirksame Bereich 43, 44 ein annähernd linearer Zusammenhang zwischen Winkelauslenkung S und Phase P erreicht wird, d.h. eine annähernd konstante Scangeschwindigkeit. Somit kann die Bildschirmeinheit 29 mit annähernd konstanter Helligkeit betrieben werden. Alternativ kann eine konstante Intensität für das virtuelle Bild erzielt werden, indem die aufgrund der sinusartig variierenden Scan-Geschwindigkeit resultierenden Abweichungen durch eine dynamische Anpassung der Helligkeit in der Bildschirmeinheit 29 korrigiert werden.

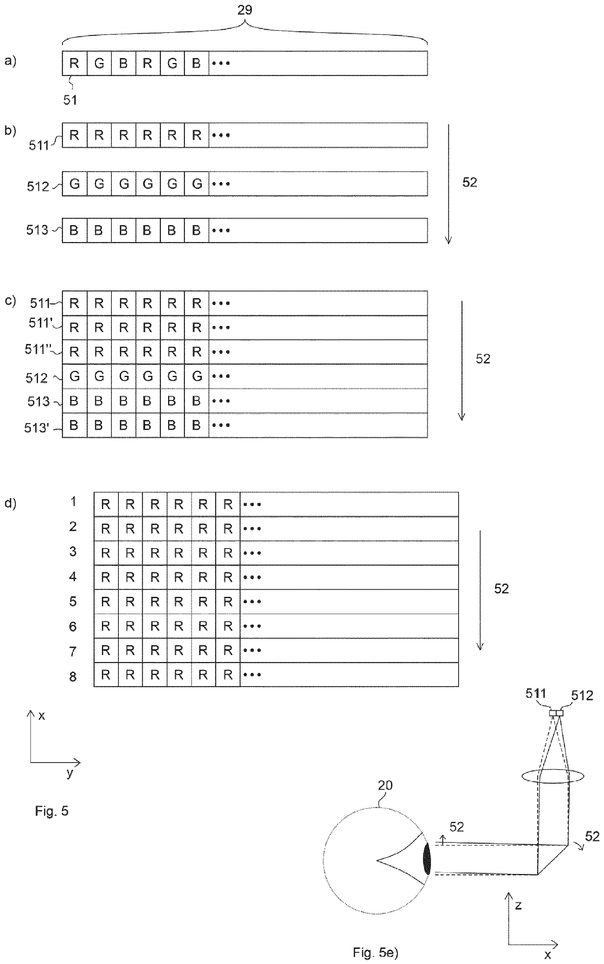

In Fig. 5 werden unterschiedliche beispielhafte Ausführungsformen einer zeilenförmigen Bildschirmeinheit gezeigt. Die zeilenförmige Bildschirmeinheit ist dabei in allen Teilfiguren mit der Haupterstreckungsrichtung in y-Richtung ausgeprägt, beispielsweise indem es 4000 oder eine andere Zahl Pixel 51 nebeneinander anordnet. Um eine Farbgebung zu ermöglichen, werden rote, grüne und blaue Pixel R, G, B verwendet, vorzugsweise ausgeführt in Form von LEDs, beispielsweise sog. Micro-LEDs. Dabei ist es erforderlich, dass die einzelnen Pixel 51 sehr schnell schaltbar sind. Sollen nämlich mit dem Scannen in der Scanrichtung 52 -beispielsweise vertikal, also entsprechend der x-Richtung in den Figuren- 2000 (virtuelle) Pixel als virtuelles Bild erzeugt werden, und die Strahlteilereinheiten 10 eine Scannerfrequenz von 45 Hz haben, d. h. sich für jedes virtuelle Pixel je zwei Scanvorgänge ä 90 Hz ergeben, dann müssen die LEDs mit 2000*90 Hz = 180 kHz geschaltet werden. Zusätzlich kann es ggf. erforderlich sein, die Helligkeit, typischerweise mit einer Auflösung von 8 Bit, zu regeln, beispielsweise indem die jeweilige LED nicht über die ganze Scanzeit zum Leuchten gebracht wird, sondern nur für eine kürzere Zeit. Die kürzeste Pulsbreite für das Leuchten der LED ist dann entsprechend noch einmal um den Faktor 256 kürzer, was einer Schaltfrequenz von 46 MHz entspricht. Alternativ kann die Intensität jedoch auch über einen absoluten Strom statt über die Pulsbreite der Aktivität der LED geregelt werden. Es sind auch alternative Display-Technologien einsetzbar, die ausreichend schnell geschaltet werden können. Dazu gehören beispielsweise Laser, welche über einen MEMS-Spiegel auf eine Zeile der Bildschirmeinheit 29 projiziert werden.

In Fig. 5a ist entsprechend eine einzeilige Anordnung gezeigt, in welcher Pixel 51 der jeweiligen Farben R, G, B nebeneinander in y-Richtung angeordnet sind und so die Bildschirmeinheit 29 bilden. In Fig. 5b sind die einzelnen Pixel einer Farbe in Form jeweiliger Subpixel-Zeilen 511, 512, 513 mit jeweiligen Farb-Sub-Bildpunkten R, G, B in einem von null verschiedenen Abstand zueinander angeordnet. Dies ist möglich, da die Scan-Richtung 52 der Strahlteilereinheiten 10 mit einem zeitlichen Versatz die Subpixel-Zeilen 511, 512, 513 unterschiedlicher Farbe überstreicht. Wird der örtliche Versatz bei der Ansteuerung entsprechend einer zeitlich versetzten Ansteuerung berücksichtigt, ergibt sich für jeden resultierenden Pixel im virtuellen Bild die Möglichkeit, eine Farbinformation als Überlagerung darzustellen.

Fig. 5c erweitert die Anwendungsmöglichkeiten dahingehend, dass mehrere Subpixel-Zeilen einer jeweiligen Farbe R, G, B dargestellt werden. Dabei kann eine Farbe mehrmals angezeigt werden, mit dem Ziel, diese im Vergleich heller erscheinen zu lassen. Dies ist beispielsweise vorteilhaft, weil die Intensitäten unterschiedlich gefärbter LEDs vom menschlichen Auge spektral unterschiedlich hell empfunden werden. In der dargestellten Ausführungsform wird die Anzahl der Subpixel-Zeilen 511, 511', 511", 512, 513, 513' unterschiedlich gewählt mit dem Ziel, den Weißpunkt D65 gut darstellen zu können.

In Fig. 5d ist eine weitere Möglichkeit zur Helligkeitssteuerung gezeigt. Dabei wird die Helligkeit eines darzustellenden Pixels in sog. Bit-Planes, Instanzen 1-8, zerlegt, wie es auch bei der Ansteuerung von Micro-Mirror-Chips aus Projektoren bekannt ist. So kann eine 8-Bit-Helligkeitsinformation auch aus 8 binären Einzelbildern mit den Helligkeiten 128, 64, 32, 16, 8, 4, 2, 1 zusammengesetzt werden. Aufgrund des Scan-Vorgangs können diese Helligkeiten nacheinander dargestellt werden, da aufgrund der Geschwindigkeit des Scan-Vorgangs im Vergleich zur menschlichen Wahrnehmung nur das Integral der Helligkeit erkannt wird. Pro Pixel muss entsprechend nur zwischen einem An- und einem Auszustand unterschieden werden und die Helligkeit kann global für die ganze Zeile eingestellt werden, beispielsweise über einen entsprechend geregelten Strom. Dies vereinfacht die Ansteuerung bei hohen Frequenzen deutlich.

Bei einem flexibel geschaltetem Bit-Plane-Schema, in dem unterschiedlichen Instanzen abwechselnd verschiedene Helligkeiten zugeordnet werden, ergibt sich zudem der Vorteil, dass die geschalteten LEDs immer nur kurz mit maximaler Leistung angesteuert werden und damit kurzzeitig eine höhere maximale Intensität erreicht werden kann. Dazu werden die Bit-Planes typischerweise gemischt, beispielsweise indem eine Helligkeitssequenz wie 1, 128, 2, 64, 4, 8, 16 für jede Instanz und damit Zeile nacheinander realisiert wird. Die flexible Vorgabe der maximalen Intensität für die jeweiligen Zeilen hat dabei auch Vorteile für das Temperaturmanagement.

Fig. 5e zeigt beispielhaft den Zusammenhang zwischen Scan-Richtung 52 und dem Abtasten zweier in x-Richtung nebeneinander angeordneter Subpixel-Zeilen 511, 512 mittels der Strahlteilereinheiten 10.

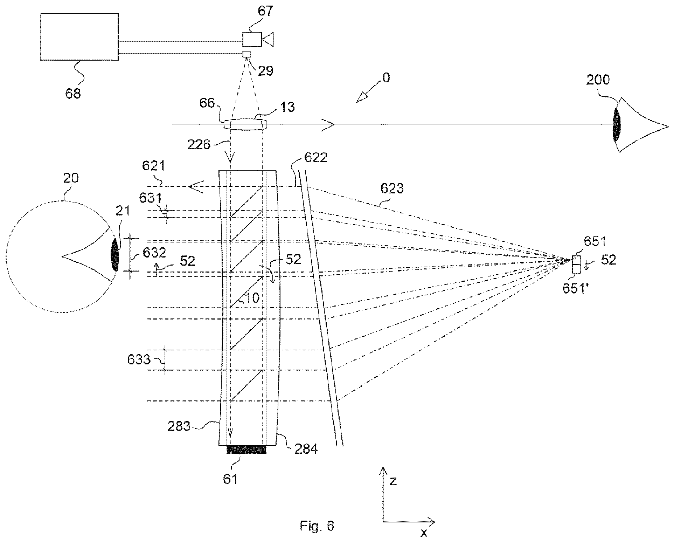

Fig. 6 zeigt nun die Bildentstehung des virtuellen Bildes in einer weiteren beispielhaften Ausführungsform. Das Licht der zeilenförmigen Bildschirmeinheit 29 wird in diesem Beispiel durch das Linsenelement 13 nach unendlich abgebildet, also parallelisiert. Somit trifft das Licht gemäß Strahlengang 226 auf die scannenden Strahlteilereinheiten 10 und wird an diesen jeweils teilweise reflektiert und teilweise transmittiert. Der Lichtanteil, der immer transmittiert wird, trifft am Ende im gezeigten Beispiel auf eine absorbierende Fläche 61 der Brillen-Anzeigevorrichtung 0, um Rückreflektionen zu vermeiden. Das reflektierte Licht wird gemäß Strahlengang 621 zum Auge umgelenkt. Da jede scannende Strahlteilereinheit 10 mit einem eigenen Strahlenbündel beiträgt und die scannenden Strahlteilereinheiten 10 hier in einem in z-Richtung variierenden Strahlteilerabstand zueinander positioniert sind, überlappen sich die einzelnen Strahlbündel teilweise (z. B. Überlappung 631) und teilweise bildet sich ein unbeleuchteter Spalt aus (beispielsweise Spalt 633). Relevant und wirksam sind jedoch nur Strahlen, welche in die Pupille 21 gelenkt werden, also innerhalb der Eintrittspupille 632 auf das Auge 20 treffen. Da der Strahlengang 226 auf unendlich fokussiert ist und dieser Strahlengang nach seiner Reflexion an den Strahlteilereinheiten 10 im gezeigten Beispiel noch die konkave Linse 283 durchläuft, erscheint ein virtuelles Bild, als wenn es gemäß dem Strahlengang 622 bzw. 623 in einer gewissen Entfernung entstanden wäre. Für einen Bildpunkt 51, der pro Zeiteinheit in der zeilenförmigen Bildschirmeinheit 29 angezeigt wird, sieht das menschliche Auge 20 einen virtuellen Bildpunkt 651, als wenn ein entsprechender realer Bildpunkt im Sichtfeld des Nutzers vorhanden wäre.

Da die teiltransparenten Strahlteilereinheiten 10 als Scannereinheiten beweglich gelagert sind, kann aus einer zeilenförmigen Bildschirmeinheit 29 ein zweidimensionales virtuelles Bild aufgebaut werden. Bewegt sich die Strahlteilereinheit 10 gemäß Richtung 52, so ändert sich der Strahlengang auch im Winkel gemäß Richtung 52. Dies hat den Effekt, dass die zeilenförmige Bildschirmeinheit 29 nun eine neue Bildfarb- und Helligkeitsinformation anzeigen kann und dieses vom menschlichen Auge 20 als virtueller Bildpunkt 651' in einer neuen Position wahrgenommen werden kann, also in Scannerrichtung 52 das restliche Bild aufgebaut werden kann. Dazu ist es notwendig, dass die zeilenförmige Bildschirmeinheit 29 in Abhängigkeit der Position der scannenden Strahlteilereinheit 10 in synchroner Art und Weise angesteuert wird. Entsprechend ist eine Sensorik vorhanden, die die Position der Strahlteilereinheiten 10 mit hinreichender Genauigkeit ermitteln kann. Diese Sensorik kann in den Strahlteilereinheiten 10 oder einer sonstigen Steuereinheit integriert sein. Die zeilenförmige Bildschirmeinheit 29 kann entsprechend von einer Steuereinheit 68 angesteuert werden, die wahlweise an der Brillen-Anzeigevorrichtung 0 oder per Kabel oder per Funk extern angeordnet bzw. mit der Brillen-Anzeigevorrichtung 0 gekoppelt ist.

Soll die Illusion eines ortsfesten virtuellen Objektes in einer realen Umgebung entstehen, muss zusätzlich die Lage der Brillenanzeigevorrichtung 0 im Raum ermittelt werden. Hierfür kann eine entsprechende Nachverfolgungseinheit 67 (Tracking-Sensorik) zum Einsatz kommen. Diese kann beispielsweise eine fest mit der Brillenanzeigevorrichtung 0 verbundene Kamera aufweisen, welche es im Zusammenspiel mit der Recheneinheit 68 ermöglicht, das virtuelle Bild so zu berechnen, dass es statisch im Raum verankert erscheint.

Das weitere Linsenelement 13 ist vorliegend als Schnitt durch eine Linse realisiert. Dadurch resultieren zwei planparallele Grenzflächen 66, die es einer weiteren Person 200 ermöglichen, durch das weitere Linsenelement 13 zu schauen, ohne dass wesentliche Verzerrungen des Dahinterliegenden auftreten. Somit hat das weitere Linsenelement 13 nur einen geringen Einfluss auf das ästhetische Erscheinungsbild der Brillen-Anzeigevorrichtung 0 und ermöglicht ein Design, das einer gewöhnlichen Brille zumindest nahekommt.

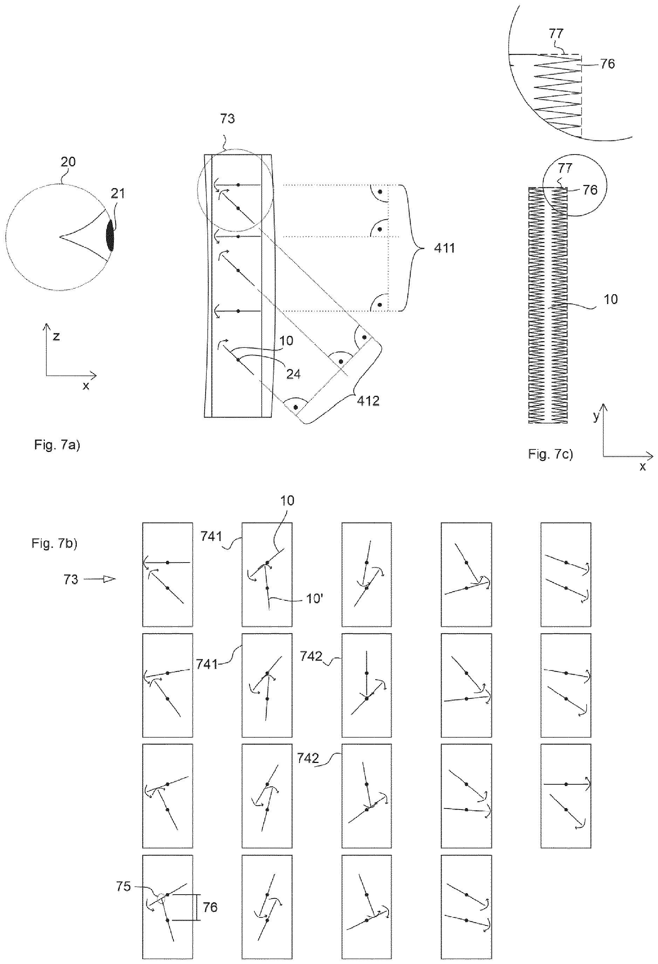

In Fig. 7 ist eine Illustration zu einer beispielhaften Ausführungsform einer Brillen-Anzeigevorrichtung mit Rotations-Scannereinheiten gezeigt. Dort sind die Strahlteilereinheiten 10 als Rotations-Scannereinheiten und nicht als Oszillations-Scannereinheiten wie in den obigen Beispielen ausgeführt. Die nicht erläuterten Merkmale können den für die anderen Beispiele erläuterten Merkmalen entsprechen.

In der in Fig. 7a gezeigten Ausführungsform drehen sich die Strahlteilereinheiten 10 mit konstanter Winkelgeschwindigkeit und damit einheitlich festgelegter Scanner- bzw. Rotationsfrequenz um die Drehachse 24. Aufgrund der optischen Randbedingungen bezüglich der relativen Anordnung der Strahlteilereinheiten 10 zueinander und zur Bildschirmeinheit 29 können die Rotations-Scannereinheiten nicht in die gleiche Richtung und phasensynchron drehen, da sich die Strahlteilereinheiten 10 sonst berühren würden. Daher werden die Strahlteilereinheiten 10 vorliegend in zwei Gruppen 411, 412 mit jeweils gegenläufiger Drehrichtung eingeteilt. Wie in den Beispielen mit Oszillations-Scannereinheiten bewegen sich die Reflexionsflächen der Strahlteilereinheiten 10 innerhalb der Gruppen 411, 412 phasengleich, stehen also durchgängig parallel zueinander.

In Fig. 7b ist das Detail 73 von Fig. 7a über eine Bewegungsdauer von 180° in 10°-Schritten gezeigt. Von oben, also in negativer z-Richtung, reflektiert immer nur eine Strahlteilereinheit 10 zum Auge 20 bzw. in die Pupille 21. In den Schritten 741 ist die zum Umlenken des Lichtes der Bildschirmeinheit 29 genutzte Strahlteilereinheit 10 die in der Figur obere Strahlteilereinheit 10. In den Schritten 742 ist die zum Umlenken des Lichtes der Bildschirmeinheit 29 genutzte Strahlteilereinheit 10 die in der Figur untere Strahlteilereinheit 10'. In den verbleibenden, nicht näher spezifizierten Schritten kann die Bildschirmeinheit 29 beispielsweise ausgeschaltet bleiben, da Licht von der Bildschirmeinheit 29 in den jeweiligen Konfigurationen der Strahlteilereinheiten 10, 10' ohnehin nicht in die Pupille gelangt. Auch kann so der Effekt der "leuchtenden Augen" vermieden werden, bei welchem Licht aus der Bildschirmeinheit 29 zu einem Gegenüber oder Gesprächspartner gelenkt wird.

Bei der Auslegung ist zu beachten, dass der Abstand 76 zwischen nächstbenachbarten Strahlteilereinheiten 10, 10' hinreichend groß gewählt wird, sodass es während einer kompletten Rotation nicht zu einem Kontakt kommt. Beispielsweise kommen sich die Strahlteilereinheiten 10 im Detail 75 sehr nahe, berühren sich aber nicht. Aus aerodynamischen Gründen ist es sinnvoll eine Annäherung der Spiegel zueinander, wie im Detail 75 gezeigt, zu vermeiden und einen hinreichend großen Restspalt vorzusehen.

Alternativ ist in Abbildung 7c eine teiltransparente Strahlteilereinheit 10 gezeigt, die eine im Querschnitt zur Drehachse 24 kammartige Geometrie aufweist. Anstatt einer rechteckigen Form 77 werden Zwischenräume 76 ermöglicht. In diesem Fall könnten die Strahlteilereinheiten 10 ohne gegenseitige Beschädigung ineinander greifen, wenn die kammartige Struktur von benachbarten Strahlteilereinheiten 10 versetzt zueinander angeordnet ist. Die Möglichkeit die Strahlteilereinheiten 10 geometrisch zu strukturieren ergibt sich analog zu einem Polka-Dot-Strahlteiler, der nicht vollflächig beschichtet ist, Da bereits Reflektanzen von ungefähr 30% oder weniger ausreichend für eine funktionierende Brillen-Anzeigevorrichtung 0 sind. Weisen die Strahlteilereinheiten 10 kammartige Strukturen wie in Abbildung 7c gezeigt auf, sollte die Reflexionsfläche im Mittel eine konstante Reflektanz aufweisen. Werden beispielsweise die kammartigen Strukturen zu den Kanten 261, 262 hin dünner, muss dort entsprechend die Reflektanz an den Kammspitzen erhöht werden.

## Patentansprüche

1. Brillen-Anzeigevorrichtung (0) zum Anzeigen eines virtuellen Bildes in einem Sichtfeld eines Nutzers, mit
- einer Gestelleinheit (17);
- einer an der Gestelleinheit (17) angebrachten zeilenförmigen Bildschirmeinheit (29) zum Abstrahlen eines Lichtes als computergenerierte Bildinformation in eine erste Richtung (-z);
- zumindest zwei an der Gestelleinheit (17) angebrachten teiltransparenten Strahlteilereinheiten (10), welche ausgebildet sind als Scannereinheiten mit einer einheitlich festgelegten Scannerfrequenz betrieben zu werden, zum Umlenken des in die erste Richtung (-z) abgestrahlten Lichtes der Bildschirmeinheit (29) in einen zweiten Richtungsbereich (-x), der bei bestimmungsgemäßem Gebrauch der Brillen-Anzeigevorrichtung (0) dem Sichtfeld des Nutzers entspricht.

2. Brillen-Anzeigevorrichtung (0) nach dem vorhergehenden Anspruch, **dadurch gekennzeichnet, dass**
die Strahlteilereinheiten (10) ausgebildet sind, mit einer Reflexionsfläche jeweils um eine quer zur ersten Richtung verlaufende Drehachse (24) zu drehen oder zu schwingen.

3. Brillen-Anzeigevorrichtung (0) nach Anspruch 2,
**dadurch gekennzeichnet, dass**
die Strahlteilereinheiten (10) als Oszillations-Scannereinheiten ausgebildet sind, deren Reflexionsfläche bei bestimmungsgemäßem Gebrauch um die Drehachse (24) schwingt.

4. Brillen-Anzeigevorrichtung (0) nach Anspruch 2,
**dadurch gekennzeichnet, dass**
die Strahlteilereinheiten (10) als Rotations-Scannereinheiten ausgebildet sind, deren Reflexionsflächen um die Drehachse (24) drehen.

5. Brillen-Anzeigevorrichtung (0) nach einem der vorhergehenden Ansprüche,
**dadurch gekennzeichnet, dass**
die Strahlteilereinheiten (10) ausgebildet sind, während eines Betriebes mit der einheitlichen Scannerfrequenz in einer vorgegebenen Phasenrelation zueinander zu stehen, wobei insbesondere für zwei oder mehr Gruppen (411, 412) von Strahlteilereinheiten (10), welche bevorzugt jeweils aus nicht nächstbenachbarten Strahlteilereinheiten (10) bestehen, Phasen vorgegeben sind, welche voneinander abweichen.

6. Brillen-Anzeigevorrichtung (0) nach einem der vorhergehenden Ansprüche,
**dadurch gekennzeichnet, dass**
die Strahlteilereinheiten (10) in einer Hochrichtung, insbesondere der ersten Richtung, betrachtet hintereinander angeordnet sind, sodass auf eine jeweilige Strahlteilereinheit von der Bildschirmeinheit (29) abgestrahltes Licht trifft, welches zuvor diejenigen der anderen Strahlteilereinheiten (10) durchlaufen hat, welche zwischen der jeweiligen Strahlteilereinheit und der Bildschirmeinheit (29) angeordnet sind.

7. Brillen-Anzeigevorrichtung (0) nach einem der vorhergehenden Ansprüche,
**dadurch gekennzeichnet, dass**
die erste Richtung bei bestimmungsgemäßem Gebrauch der Brillen-Anzeigevorrichtung (0) die Hochrichtung ist, und die zeilenförmige Bildschirmeinheit (29) in der Hochrichtung über den Strahlteilereinheiten (10) angeordnet ist.

8. Brillen-Anzeigevorrichtung (0) nach einem der vorhergehenden Ansprüche,
**dadurch gekennzeichnet, dass**
die Länge als Haupterstreckungsrichtung der zeilenförmigen Bildschirmeinheit (29) um zumindest eine Größenordnung (Faktor 10), insbesondere zumindest eineinhalb Größenordnungen (Faktor 50), größer ist als eine quer zur Länge verlaufende Breite der zeilenförmigen Bildschirmeinheit (29).

9. Brillen-Anzeigevorrichtung (0) nach einem der vorhergehenden Ansprüche,
**dadurch gekennzeichnet, dass**
die zeilenförmige Bildschirmeinheit (29) eine Pixel-Zeile, insbesondere genau eine Pixel-Zeile, von Bildpunkten (51) aufweist, welche jeweils durch entlang der Zeile alternierend angeordnete unterschiedliche Farb-Sub-Bildpunkte (R, G, B) gebildet werden.

10. Brillen-Anzeigevorrichtung (0) nach einem der vorhergehenden Ansprüche,
**dadurch gekennzeichnet, dass**
die zeilenförmige Bildschirmeinheit (29) mehrere Subpixel-Zeilen (511, 512, 513) jeweiliger Farb-Sub-Bildpunkte (R, G, B) aufweist, wobei den Subpixel-Zeilen (511, 512, 513) jeweils eine spezifische Farbe zugeordnet ist, insbesondere die zeilenförmige Bildschirmeinheit (29) von jeder der Subpixel-Zeilen (511, 512, 513) genau eine aufweist oder von zumindest einer der Subpixel-Zeilen mehr oder weniger als von den anderen Subpixel-Zeilen.

11. Brillen-Anzeigevorrichtung (0) nach einem der beiden vorhergehenden Ansprüche,
**dadurch gekennzeichnet, dass**
die Pixel-Zeile oder die Subpixel-Zeilen (511, 512, 513) der zeilenförmigen Bildschirmeinheit (29) in Form von jeweiligen Instanzen (1, 2, .., 8) jeweils mehrfach, insbesondere 8-fach, ausgeführt sind, und jede Instanz der Pixel-Zeile beziehungsweise Subpixel-Zeilen ausgebildet ist, mit einer spezifisch für jede Instanz unterschiedlich vorgegebenen Maximalhelligkeit betrieben zu werden.

12. Brillen-Anzeigevorrichtung (0) nach einem der vorhergehenden Ansprüche,
**dadurch gekennzeichnet, dass**
an der Gestelleinheit (17) mehrere in ihrer jeweiligen Haupterstreckungsrichtung zumindest im Wesentlichen parallel verlaufende zeilenförmige Bildschirmeinheiten (29) angebracht sind, welche jeweils in der Hochrichtung in einem unterschiedlichen Abstand von den Strahlteilereinheiten (10) angeordnet sind.

13. Brillen-Anzeigevorrichtung (0) nach einem der vorhergehenden Ansprüche,
**dadurch gekennzeichnet, dass**
- zwischen den Strahlteilereinheiten (10) und einer Augenposition, welche bei bestimmungsgemäßem Gebrauch der Brillen-Anzeigevorrichtung (0) von einem Auge des Nutzers eingenommen wird, ein Linsenelement (283), insbesondere mit oder aus einer Dispersionslinse, angeordnet ist; und/oder
- zwischen den Strahlteilereinheiten (10) und einer Umgebung, welche bei bestimmungsgemäßem Gebrauch der Brillen-Anzeigevorrichtung (0) von dem Nutzer durch die Strahlteilereinheiten (10) hindurch betrachtbar ist, ein Linsenelement (284), insbesondere mit oder aus einer Fokussierlinse, angeordnet ist.

14. Brillen-Anzeigevorrichtung (0) nach einem der vorhergehenden Ansprüche,
**dadurch gekennzeichnet, dass**
zwischen den Strahlteilereinheiten (10) und der Bildschirmeinheit (29) ein weiteres Linsenelement (13), insbesondere mit oder aus einer Fokussierlinse, angeordnet ist, wobei insbesondere das weitere Linsenelement (13) zwei längs der ersten Richtung verlaufende planparallele Grenzflächen aufweist.

15. Brillen-Anzeigevorrichtung (0) nach einem der vorhergehenden Ansprüche,
**gekennzeichnet durch**
eine an der Gestelleinheit (17) angebrachten Blendeneinheit, welche ausgebildet ist mit einer quer zur ersten Richtung verlaufenden Blende (33) und/oder mit einer parallel zu einer von den Strahlteilereinheiten (10) aufgespannten Ebene verlaufenden Blende (34) Licht, welches von den Strahlteilereinheiten (10) umgelenkt wird, gegen aus zur ersten Richtung benachbarten Richtungen einfallendes Licht abzuschirmen.

## Claims

1. An eyewear display device (0) for displaying a virtual image in a field of view of a user, comprising
- a frame unit (17);
- a line-shaped screen unit (29) attached to the frame unit (17) for emitting light as computer-generated image information in a first direction (-z);
- at least two partially transparent beam splitter units (10) attached to the frame unit (17), which are designed to be operated as scanner units at a uniformly defined scanner frequency, for deflecting the light emitted in the first direction (-z) from the screen unit (29) into a second directional range (-x) corresponding to the field of view of the user when the eyewear display device (0) is used as intended.

2. The eyewear display device (0) according to the preceding claim,
**characterized in that**
the beam splitter units (10) are designed to rotate or oscillate with a respective reflection surface about an axis of rotation (24) running transversely to the first direction.

3. The eyewear display device (0) according to claim 2,
**characterized in that**
the beam splitter units (10) are designed as oscillation scanner units, the reflection surface of which oscillate about the axis of rotation (24) when used as intended.

4. The eyewear display device (0) according to claim 2,
**characterized in that**
the beam splitter units (10) are designed as rotary scanner units, the reflection surfaces of which rotate about the axis of rotation (24).

5. The eyewear display device (0) according to any one of the preceding claims,
**characterized in that**
the beam splitter units (10) are designed to be in a predetermined phase relationship to one another during operation at the uniform scanner frequency, wherein in particular phases which deviate from one another are specified for two or more groups (411, 412) of beam splitter units (10), which preferably each consist of beam splitter units (10) that are not immediately adjacent.

6. The eyewear display device (0) according to any one of the preceding claims,
**characterized in that**
the beam splitter units (10) are arranged one behind the other when viewed in a vertical direction, in particular the first direction, so that light emitted by the screen unit (29) impinges on a respective beam splitter unit where the light has previously passed through those of the other beam splitter units (10) which are arranged between the respective beam splitter unit and the screen unit (29).

7. The eyewear display device (0) according to any one of the preceding claims,
**characterized in that**
the first direction, when the eyewear display device (0) is used as intended, is the vertical direction, and the line-shaped screen unit (29) is arranged in the vertical direction above the beam splitter units (10).

8. The eyewear display device (0) according to any one of the preceding claims,
**characterized in that**
the length as the main extension direction of the line-shaped screen unit (29) is at least one order of magnitude (factor 10), in particular at least one and a half orders of magnitude (factor 50), greater than a width of the line-shaped screen unit (29) running transversely to the length.

9. The eyewear display device (0) according to any one of the preceding claims,
**characterized in that**
the line-shaped screen unit (29) comprises a pixel line, in particular precisely one pixel line, of pixels (51) which are each formed by different color sub-pixels (R, G, B) arranged alternately along the line.

10. The eyewear display device (0) according to any one of the preceding claims,
**characterized in that**
the line-shaped screen unit (29) comprises a plurality of sub-pixel lines (511, 512, 513) of respective color sub-pixels (R, G, B), wherein each sub-pixel line (511, 512, 513) is assigned a specific color, in particular the line-shaped screen unit (29) of each of the sub-pixel lines (511, 512, 513) comprises exactly one or of at least one of the sub-pixel lines more or less than of the other sub-pixel lines.

11. The eyewear display device (0) according to any one of the two preceding claims,
**characterized in that**
the pixel line or the sub-pixel lines (511, 512, 513) of the line-shaped screen unit (29) each are implemented in the form of respective instances (1, 2, ..., 8) a plurality of times, in particular 8 times, and each instance of the pixel line or sub-pixel line is designed to be operated at a maximum brightness that is specifically different for each instance.

12. The eyewear display device (0) according to any one of the preceding claims,
**characterized in that**
a plurality of line-shaped screen units (29) running at least substantially parallel in their respective main extension direction are attached to the frame unit (17), the line-shaped screen units each being arranged at a different distance from the beam splitter units (10) in the vertical direction.

13. The eyewear display device (0) according to any one of the preceding claims,
**characterized in that**
- a lens element (283), in particular having or made of a dispersion lens, is arranged between the beam splitter units (10) and an eye position which is occupied by an eye of the user when the eyewear display device (0) is used as intended; and/or
- a lens element (284), in particular having or made of a focusing lens, is arranged between the beam splitter units (10) and an environment which can be viewed by the user through the beam splitter units (10) when the eyewear display device (0) is used as intended.

14. The eyewear display device (0) according to any one of the preceding claims,
**characterized in that**
a further lens element (13), in particular having or made of a focusing lens, is arranged between the beam splitter units (10) and the screen unit (29), wherein the further lens element (13) in particular comprises two plane-parallel boundary surfaces running along the first direction.

15. The eyewear display device (0) according to any one of the preceding claims,
**characterized by**
a diaphragm unit attached to the frame unit (17), the diaphragm unit being designed with a diaphragm (33) running transversely to the first direction and/or with a diaphragm (34) running parallel to a plane spanned by the beam splitter units (10), to shield light which is deflected by the beam splitter units (10) against light incident from directions adjacent to the first direction.

## Revendications

1. Dispositif d'affichage de lunettes (0) permettant d'afficher une image virtuelle dans un champ de vision d'un utilisateur, avec
- une unité de monture (17) ;
- une unité d'écran (29) en forme de ligne montée sur l'unité de monture (17) pour émettre une lumière en tant qu'information d'image générée par ordinateur dans une première direction (-z) ;
- au moins deux unités de séparation de faisceau (10) partiellement transparentes, montées sur l'unité de monture (17), qui sont conçues pour être exploitées en tant qu'unités de balayage avec une fréquence de balayage fixée de manière uniforme, pour dévier la lumière de l'unité d'écran (29), émise dans la première direction (-z), dans une deuxième zone de direction (-x) qui correspond au champ de vision de l'utilisateur lorsque le dispositif d'affichage de lunettes (0) est utilisé correctement.

2. Dispositif d'affichage de lunettes (0) selon la revendication précédente, **caractérisé en ce que**
les unités de séparation de faisceau (10) sont conçues pour tourner ou osciller avec une surface de réflexion respectivement autour d'un axe de rotation (24) s'étendant transversalement à la première direction.

3. Dispositif d'affichage de lunettes (0) selon la revendication 2, **caractérisé en ce que**
les unités de séparation de faisceau (10) sont conçues comme des unités de balayage oscillantes dont la surface de réflexion oscille autour de l'axe de rotation (24) lors d'une utilisation conforme.

4. Dispositif d'affichage de lunettes (0) selon la revendication 2, **caractérisé en ce que**
les unités de séparation de faisceau (10) sont conçues comme des unités de balayage rotatif dont les surfaces de réflexion tournent autour de l'axe de rotation (24).

5. Dispositif d'affichage de lunettes (0) selon l'une des revendications précédentes, **caractérisé en ce que**
les unités de séparation de faisceau (10) sont conçues pour se trouver dans une relation de phase prédéterminée les unes par rapport aux autres pendant un fonctionnement à la fréquence de balayage uniforme, des phases qui diffèrent les unes des autres étant notamment prédéterminées pour deux groupes (411, 412) ou plus d'unités de séparation de faisceau (10),
qui sont de préférence constitués chacun d'unités de séparation de faisceau (10) non voisines les unes des autres.

6. Dispositif d'affichage de lunettes (0) selon l'une des revendications précédentes, **caractérisé en ce que**
les unités de séparation de faisceaux (10) sont disposées les unes derrière les autres, vues dans une direction ascendante, en particulier la première direction, de sorte que la lumière émise par l'unité d'écran (29) frappe une unité de séparation de faisceaux respective, qui a auparavant traversé celles des autres unités de séparation de faisceaux (10) qui sont disposées entre l'unité de séparation de faisceaux respective et l'unité d'écran (29).

7. Dispositif d'affichage de lunettes (0) selon l'une des revendications précédentes, **caractérisé en ce que**
la première direction est la direction verticale lors d'une utilisation conforme du dispositif d'affichage de lunettes (0), et l'unité d'écran (29) en forme de ligne est disposée dans la direction verticale au-dessus des unités de séparation de faisceau (10).

8. Dispositif d'affichage de lunettes (0) selon l'une des revendications précédentes, **caractérisé en ce que**
la longueur, en tant que direction d'extension principale de l'unité d'écran (29) en forme de ligne, est supérieure d'au moins un ordre de grandeur (facteur 10), en particulier d'au moins un ordre de grandeur et demi (facteur 50), à une largeur de l'unité d'écran (29) en forme de ligne s'étendant transversalement à la longueur.

9. Dispositif d'affichage de lunettes (0) selon l'une des revendications précédentes, **caractérisé en ce que**
l'unité d'écran (29) en forme de ligne comporte une ligne de pixels, en particulier exactement une ligne de pixels, de points d'image (51), qui sont formés respectivement par des sous-points d'image de couleur différente (R, G, B) disposés en alternance le long de la ligne.

10. Dispositif d'affichage de lunettes (0) selon l'une des revendications précédentes, **caractérisé en ce que**
l'unité d'écran (29) en forme de ligne comporte plusieurs lignes de sous-pixels (511, 512, 513) de sous-pixels de couleur respectifs (R, G, B), une couleur spécifique étant associée à chacune des lignes de sous-pixels (511, 512, 513), en particulier l'unité d'écran (29) en forme de ligne comporte exactement une de chacune des lignes de sous-pixels (511, 512, 513) ou plus ou moins de l'une au moins des lignes de sous-pixels que des autres lignes de sous-pixels.

11. Dispositif d'affichage de lunettes (0) selon l'une des deux revendications précédentes, **caractérisé en ce que**
la ligne de pixels ou les lignes de sous-pixels (511, 512, 513) de l'unité d'écran (29) en forme de ligne sont réalisées sous forme d'instances respectives (1, 2, .., 8) respectivement multiples, en particulier octuples, et chaque instance de la ligne de pixels ou des lignes de sous-pixels est conçue pour être exploitée avec une luminosité maximale prédéfinie spécifiquement différente pour chaque instance.

12. Dispositif d'affichage de lunettes (0) selon l'une des revendications précédentes, **caractérisé en ce que**
plusieurs unités d'écran (29) en forme de ligne s'étendant au moins sensiblement parallèlement dans leur direction d'extension principale respective sont montées sur l'unité de monture (17), lesquelles sont disposées respectivement dans la direction verticale à une distance différente des unités de séparation de faisceau (10).

13. Dispositif d'affichage de lunettes (0) selon l'une des revendications précédentes, **caractérisé en ce que**
- un élément de lentille (283), en particulier avec ou constitué d'une lentille de dispersion, est disposé entre les unités de séparation de faisceau (10) et une position oculaire qui est prise par un oeil de l'utilisateur lors de l'utilisation conforme du dispositif d'affichage de lunettes (0) ; et/ou
- un élément de lentille (284), en particulier avec ou constitué d'une lentille de focalisation, est disposé entre les unités de séparation de faisceau (10) et un environnement qui, lors de l'utilisation conforme du dispositif d'affichage de lunettes (0), peut être observé par l'utilisateur à travers les unités de séparation de faisceau (10).

14. Dispositif d'affichage de lunettes (0) selon l'une des revendications précédentes, **caractérisé en ce que**
un autre élément de lentille (13), en particulier avec ou constitué d'une lentille de focalisation, est disposé entre les unités de séparation de faisceau (10) et l'unité d'écran (29), l'autre élément de lentille (13) comportant en particulier deux surfaces limites planes et parallèles s'étendant le long de la première direction.

15. Dispositif d'affichage de lunettes (0) selon l'une des revendications précédentes, **caractérisé par**
une unité de diaphragme montée sur l'unité de monture (17), qui est conçue avec un diaphragme (33) s'étendant transversalement à la première direction et/ou avec un diaphragme (34) s'étendant parallèlement à un plan tendu par les unités de séparation de faisceau (10), pour protéger la lumière, qui est déviée par les unités de séparation de faisceau (10), contre la lumière incidente provenant de directions voisines de la première direction.
